# EUROPEAN PATENT SPECIFICATION

(11) **EP 4 134 830 B1**
(45) Date of publication and mention of the grant of the patent: **03.07.2024**
(21) Application number: 22188425.7
(22) Date of filing: 03.08.2022
(51) Int. Cl.: G06F 13/16, G06F 13/40, G06F 13/38

(54) **MULTI-FUNCTION FLEXIBLE COMPUTATIONAL STORAGE DEVICE**
MULTIFUNKTIONALE FLEXIBLE RECHNERISCHE SPEICHERVORRICHTUNG
DISPOSITIF DE STOCKAGE DE CALCUL FLEXIBLE MULTIFONCTION

(30) Priority: 12.08.2021 US 202163232631 P; 10.02.2022 US 202217669351
(43) Date of publication of application: 15.02.2023
(73) Proprietor: Samsung Electronics Co., Ltd., Gyeonggi-do, 16677 (KR)
(72) Inventor: KACHARE, Ramdas P., San Jose, CA, 95134 (US); HUEN, Hingkwan, San Jose, CA, 95134 (US); LAU, Jimmy, San Jose, CA, 95134 (US); BUTLER, Howard R., San Jose, CA, 95134 (US); YAO, Xuebin, San Jose, CA, 95134 (US)
(74) Representative: Kuhnen & Wacker Patent- und Rechtsanwaltsbüro PartG mbB

(56) References cited:
- US-A1- 2018 095 915
- US-A1- 2020 401 751
- US-B1- 10 509 758

## Description

### FIELD

The disclosure relates generally to storage devices, and more particularly to a bridge that permits access to a storage device and one or more computational storage units.

### BACKGROUND

The present background section is intended to provide context only, and the disclosure of any concept in this section does not constitute an admission that said concept is prior art.

With the increase in capacity offered by storage devices, applications may process more and more data. Transferring large amounts of data from the storage device to main memory for an application to process may require significant amounts of time. In addition, having the host processor execute the commands to process that data may impose a burden on the host processor.

A need remains to improve the processing data.

US 2020/401751 A1 discloses: A Lightweight Bridge (LWB). The LWB may be a circuit. An endpoint of the LWB that may expose a plurality of Physical Functions (PFs) to a host. A root port of the LWB may connect to a device and determine the PFs and Virtual Functions (VFs) exposed by the device. An Application Layer-Endpoint (APP-EP) and an Application Layer-Root Port (APP-RP) may translate between the PFs exposed by the endpoint and the PFs/VFs exposed by the device. The APP-EP and the APP-RP may implement a mapping between the PFs exposed by the endpoint and the PFs/VFs exposed by the device.

US 10 509 758 B1 discloses: Systems and methods for hot-plugging emulated peripheral devices (e.g., endpoints) into host devices that either have a hypervisor that does not support virtualized peripheral device or that do not include a hypervisor. A configurable peripheral device can emulate a switch that includes upstream ports and downstream ports. When a new endpoint device is requested, the configurable peripheral device can, using an emulation configuration for the new endpoint device, generate an emulation for the new endpoint device. The configurable peripheral device can connect the endpoint device to a downstream port, and then trigger a hot-plug mechanism, through which the host device can add the new endpoint device to the known hardware of the host device.

US 2018/095915 A1 discloses: Enabling a protocol for efficiently and reliably using the NVME protocol over a network, referred to as NVME over Network, or NVMEoN, may include an NVMEoN exchange layer for handling exchanges between initiating and target nodes on a network, a burst transmission protocol that provides guaranteed delivery without duplicate retransmission, and an exchange status block approach to manage state information about exchanges.

### SUMMARY

The invention is defined in the appended claims. Embodiments of the disclosure include one or more bridges. The bridge may support one or more storage devices and one or more computational storage units. The bridge may expose functions to the host processor similar to those offered by the storage devices and computational storage units. The bridge may support transferring data between the storage devices and the computational storage units.

### BRIEF DESCRIPTION OF THE DRAWINGS

The drawings described below are examples of how embodiments of the disclosure may be implemented, and are not intended to limit embodiments of the disclosure. The drawings are intended to provide illustration and may not be to scale.
FIG. 1 shows a machine including a multi-function device to support modular storage devices and/or computational storage units, according to embodiments of the disclosure.
FIG. 2 shows details of the machine of FIG. 1, according to embodiments of the disclosure.
FIG. 3 shows details of the multi-function device of FIG. 1, according to embodiments of the disclosure.
FIG. 4 shows details of the storage device of FIG. 1, according to embodiments of the disclosure.
FIG. 5A shows a first example implementation of the computational storage unit of FIG. 1, according to embodiments of the disclosure.
FIG. 5B shows a second example implementation of the computational storage unit of FIG. 1, according to embodiments of the disclosure.
FIG. 5C shows a third example implementation of the computational storage unit of FIG. 1, according to embodiments of the disclosure.
FIG. 5D shows a fourth example implementation of the computational storage unit of FIG. 1, according to embodiments of the disclosure.
FIG. 6 shows a flowchart of an example procedure for using the multi-function device of FIG. 1 to deliver requests to the storage device of FIG. 1 and/or the computational storage unit of FIG. 1, according to embodiments of the disclosure.
FIG. 7 shows a flowchart of an example procedure for using the multi-function device of FIG. 1 to identify exposed functions of the storage device of FIG. 1 and/or the computational storage unit of FIG. 1, according to embodiments of the disclosure.
FIG. 8 shows a flowchart of an example procedure for using the asynchronous buffers of FIG. 3, according to embodiments of the disclosure.
FIG. 9 shows a flowchart of an example procedure for replacing the computational storage unit of FIG. 1 with another computational storage unit, according to embodiments of the disclosure.
FIG. 10 shows a flowchart of an example procedure for using the multi-function device of FIG. 1 to deliver requests between devices attached to the multi-function device of FIG. 1, according to embodiments of the disclosure.
FIG. 11A shows a flowchart of an example procedure for devices attached to the multi-function device of FIG. 1 to share data, according to embodiments of the disclosure.
FIG. 11B continues the flowchart of FIG. 11A of the example procedure for devices attached to the multi-function device of FIG. 1 to share data, according to embodiments of the disclosure.

### DETAILED DESCRIPTION

Reference will now be made in detail to embodiments of the disclosure, examples of which are illustrated in the accompanying drawings. In the following detailed description, numerous specific details are set forth to enable a thorough understanding of the disclosure. It should be understood, however, that persons having ordinary skill in the art may practice the disclosure without these specific details. In other instances, well-known methods, procedures, components, circuits, and networks have not been described in detail so as not to unnecessarily obscure aspects of the embodiments.

It will be understood that, although the terms first, second, etc. may be used herein to describe various elements, these elements should not be limited by these terms. These terms are only used to distinguish one element from another. For example, a first module could be termed a second module, and, similarly, a second module could be termed a first module, without departing from the scope of the disclosure.

The terminology used in the description of the disclosure herein is for the purpose of describing particular embodiments only and is not intended to be limiting of the disclosure. As used in the description of the disclosure and the appended claims, the singular forms "a", "an", and "the" are intended to include the plural forms as well, unless the context clearly indicates otherwise. It will also be understood that the term "and/or" as used herein refers to and encompasses any and all possible combinations of one or more of the associated listed items. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. The components and features of the drawings are not necessarily drawn to scale.

As storage devices increase in capacity, the amount of data to be processed by an application may also increase. The time required to transfer such data between the storage device and main memory may increase, potentially slowing down execution of the application. In addition, having the host processor execute the commands may place a burden on the host processor, which may reduce the cycles available for the host processor to execute other commands.

Embodiments of the disclosure address these problems by offering a bridge. The bridge may connect the host processor, one or more storage devices, and one or more computational storage units. The bridge may determine the functions offered by the storage devices and computational storage units, and may expose to the host processor similar functions. The computational storage units may carry out commands on behalf of the application. The host processor may communicate with the bridge, and the bridge may communicate with the storage devices and/or computational storage units.

The bridge may also include a buffer to enable the storage devices and/or computational storage units to share data without transferring the data through main memory.

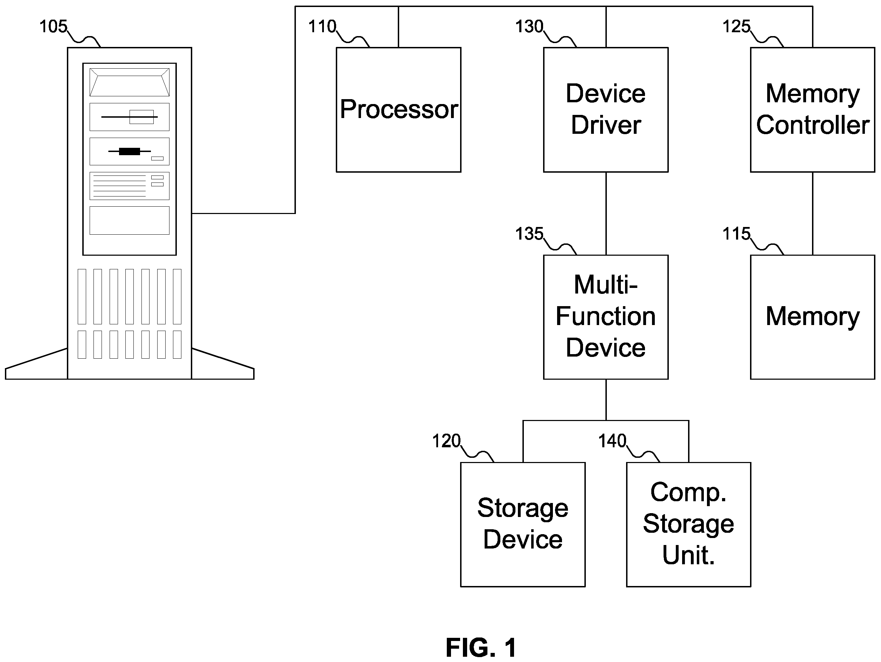

FIG. 1 shows a machine including an accelerator to reduce data dimensionality and perform calculations, according to embodiments of the disclosure. In FIG. 1, machine 105, which may also be termed a host or a system, may include processor 110, memory 115, and storage device 120. Processor 110 may be any variety of processor. (Processor 110, along with the other components discussed below, are shown outside the machine for ease of illustration: embodiments of the disclosure may include these components within the machine.) While FIG. 1 shows a single processor 110, machine 105 may include any number of processors, each of which may be single core or multi-core processors, each of which may implement a Reduced Instruction Set Computer (RISC) architecture or a Complex Instruction Set Computer (CISC) architecture (among other possibilities), and may be mixed in any desired combination.

Processor 110 may be coupled to memory 115. Memory 115 may be any variety of memory, such as flash memory, Dynamic Random Access Memory (DRAM), Static Random Access Memory (SRAM), Persistent Random Access Memory, Ferroelectric Random Access Memory (FRAM), or Non-Volatile Random Access Memory (NVRAM), such as Magnetoresistive Random Access Memory (MRAM) etc. Memory 115 may be a volatile or non-volatile memory, as desired. Memory 115 may also be any desired combination of different memory types, and may be managed by memory controller 125. Memory 115 may be used to store data that may be termed "short-term": that is, data not expected to be stored for extended periods of time. Examples of short-term data may include temporary files, data being used locally by applications (which may have been copied from other storage locations), and the like.

Processor 110 and memory 115 may also support an operating system under which various applications may be running. These applications may issue requests (which may also be termed commands) to read data from or write data to either memory 115. When storage device 120 is used to support applications reading or writing data via some sort of file system, storage device 120 may be accessed using device driver 130. While FIG. 1 shows one storage device 120, there may be any number (one or more) of storage devices in machine 105. Storage device 120 may support any desired protocol or protocols, including, for example, the Non-Volatile Memory Express (NVMe) protocol.

While FIG. 1 uses the generic term "storage device", embodiments of the disclosure may include any storage device formats that may benefit from the use of computational storage units, examples of which may include hard disk drives and Solid State Drives (SSDs). Any reference to "SSD" below should be understood to include such other embodiments of the disclosure.

Machine 105 may also include multi-function device 135 (which may also be termed an accelerator or a device). As discussed below, multi-function device 135 may support connections to storage device 120 and computational storage unit 140, but present to processor 110 as though storage device 120 and computational storage unit 140 were a single device. Multi-function device 135 may enable modularity in storage device 120 and/or computational storage unit 140, in that storage device 120 and/or computational storage unit 140 may be added or replaced without necessarily having to replace other components connected to multi-function device 135.

Multi-function device 135 may be implemented using any desired hardware. For example, multi-function device 135, or components thereof, may be implemented using a Field Programmable Gate Array (FPGA), an Application-Specific Integrated Circuit (ASIC), a central processing unit (CPU), a System-on-a-Chip (SoC), a graphics processing unit (GPU), a general purpose GPU (GPGPU), a data processing unit (DPU), a neural processing unit (NPU), a Network Interface Card (NIC), or a tensor processing unit (TPU), to name a few possibilities. Multi-function device 135 may also use a combination of these elements to implement multi-function device 135.

While FIG. 1 shows device driver 130, which is described above as supporting access to storage device 120, machine 105 may also include device drivers (not shown) for computational storage unit 140 and/or multi-function device 135. That is, embodiments of the disclosure may support device driver 130 supporting any or all of storage device 120, computational storage unit 140, or multi-function device 135, and embodiments of the disclosure may include additional device drivers to support any or all combinations of these components.

In some embodiments of the disclosure, device driver 130 (and other device drivers, such as to support computational storage unit 140) may provide application programming interfaces (APIs) to access storage device 120 and/or computational storage unit 140. By supporting existing device drivers, existing applications may be executed by processor 110 without change to the applications (although embodiments of the disclosure may involve modifications to other elements in a software stack). For example, a TPU may have a TPU device driver, or a GPU may have a GPU device driver: applications that access functions of the TPU or the GPU may continue to use the existing TPU device driver or GPU device driver. In addition, by supporting existing device drivers, computational storage unit 140 may be any computational storage unit, even if manufactured by a different manufacturer from storage device 120 and/or multi-function device 135. Further, in some embodiments of the disclosure, device driver 130 (or other device drivers) may be proprietary.

Embodiments of the disclosure may include any desired mechanism to communicate with storage device 120 and/or computational device 140. For example, storage device 120 and/or computational device 140 may connect to a bus, such as a Peripheral Component Interconnect Express (PCIe) bus, or storage device 120 and/or computational device 140 may include Ethernet interfaces or some other network interface. Other potential interfaces to storage device 120 and/or computational device 140 may include Remote Direct Memory Access (RDMA), Transmission Control Protocol/Internet Protocol (TCP/IP), InfiniBand, Serial Attached Small Computer System Interface (SCSI) (SAS), Internet SCSI (iSCSI), and Serial AT Attachment (SATA), among other possibilities.

Machine 105 may include a range of addresses in memory 115 that are addressable by processor 110, storage device 120, and/or computational storage unit 140. In some embodiments of the disclosure, processor 110 may allocate subsets of this address range that may be associated with commands to be sent to storage device 120 and/or computational storage unit 140. In addition, processor 110 may allocate a subset of this address range that may be associated with commands for peer-to-peer communication between storage device 120 and computational storage unit 140. That is, by associating a command with a particular address in memory 115, it may be possible to determine whether the command is intended for storage device 120, computational storage unit 140, or for transferring data between storage device 120 and computational storage unit 140. Note that memory 115 might not include enough memory to include such a physical address, but memory 115 is not necessarily required to actually enough memory to include such an address. For example, memory 115 might include 2 gigabytes (GB) of memory, but might support addressing up to 4 GB of memory. A subset of addresses, such as those between 2 GB and 3 GB, might be used to identify commands for peer-to-peer communication, even though memory 115 might not be able to process a request for those particular addresses. Multi-function device 135 may identify such commands based on the address assigned to the command, and may intercept such commands for processing.

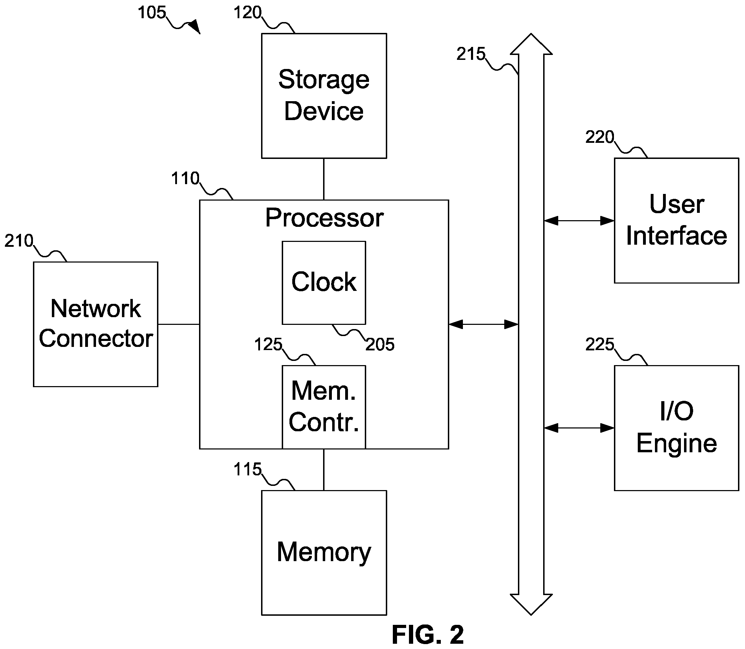

FIG. 2 shows details of machine 105 of FIG. 1, according to embodiments of the disclosure. In FIG. 2, typically, machine 105 includes one or more processors 110, which may include memory controllers 120 and clocks 205, which may be used to coordinate the operations of the components of the machine. Processors 110 may also be coupled to memories 115, which may include random access memory (RAM), read-only memory (ROM), or other state preserving media, as examples. Processors 110 may also be coupled to storage devices 125, and to network connector 210, which may be, for example, an Ethernet connector or a wireless connector. Processors 110 may also be connected to buses 215, to which may be attached user interfaces 220 and Input/Output (I/O) interface ports that may be managed using I/O engines 225, among other components.

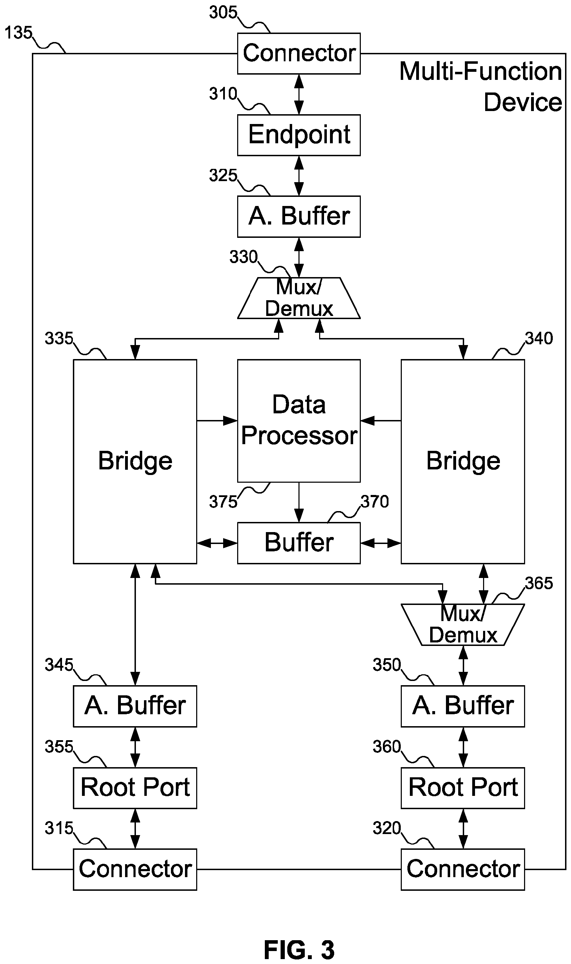

FIG. 3 shows details of multi-function device 135 of FIG. 1, according to embodiments of the disclosure. In FIG. 3, multi-function device 135 may include connector 305. Connector 305 may provide a connection to a bus that may be used to communicate with processor 110 of FIG. 1. For example, connector 305 may provide a connection to a PCIe bus, but other busses may be used as well.

Endpoint 310 may be connected to (or implemented as part of) connector 305. Endpoint 310 may function as an endpoint for queries from processor 110 of FIG. 1. Endpoint 310 may expose functions of devices attached to other connectors of multi-function device 135, such as connectors 315 and 320, as discussed further below.

Asynchronous buffer 325 may be connected to endpoint 310 and/or connector 305. Asynchronous buffer 325 may act as a landing point for requests, messages, and/or data to be exchanged between host processor 110 of FIG. 1 and other devices connected to multi-function device 135. Asynchronous buffer 325 may be asynchronous, in that asynchronous buffer 325 may operate at a different clock cycle than processor 110. That is, processor 110 of FIG. 1 may send a request, message, or data based on the clock cycle of processor 110 of FIG. 1, which may be written into asynchronous buffer 325 when received from processor 110 of FIG. 1; the request, message, or data may then be read from asynchronous buffer 325 at a time governed by the clock cycle of multi-function device 135. By including asynchronous buffer 325, multi-function device 135 may avoid needing to operate at the same clock cycle as processor 110.

Note that in some embodiments of the disclosure, multi-function device 135 may operate using the same clock cycle as processor 110 of FIG. 1. In such embodiments of the disclosure, asynchronous buffer 325 may be omitted entirely, or replaced with a synchronous buffer (to permit temporary storage of requests, messages, and/or data received from or to be transmitted to processor 110 of FIG. 1).

Multiplexer/demultiplexer 330 may be connected to asynchronous buffer 325. Multiplexer/demultiplexer 330 may access requests, messages, and/or data from asynchronous buffer 325. Multiplexer/demultiplexer 330 may then determine which device connected to multi-function device 135 the request, message, or data is intended, and may route the request, message, or data accordingly. To accomplish this function, multiplexer/demultiplexer 330 may also be connected to bridges 335 and 340, each of which may ultimately deliver a request, message, or data to a particular device connected to multi-function device 135. In another embodiment of the disclosure, multiplexer/demultiplexer 330 may communicate with more than two bridges. How multiplexer/demultiplexer 330 may determines to which bridge a particular request should be delivered is discussed further below.

Bridges 335 and 340 may be connected to asynchronous buffers 345 and 350, respectively. Asynchronous buffers 345 and 350, like asynchronous buffer 325, may enable multi-function device 135 to operate at a different clock cycle than the various devices connected to connectors 315 and 320. In addition, like asynchronous buffer 325, in some embodiments of the disclosure multi-function device 135 may operate using the same clock cycle as the device(s) connected to connectors 315 and/or 320. In such embodiments of the disclosure, asynchronous buffer 345 and/or 350 may be omitted entirely, or replaced with synchronous buffers (to permit temporary storage of requests, messages, and/or data received from or to be transmitted to the devices connected to connectors 315 and/or 320).

Root ports 355 and 360 may be connected to asynchronous buffers 345 and 350 respectively (and may be implemented as part of connectors 315 and 320, respectively). Root ports 355 and 360 may communicate with devices connected to connectors 315 and 320, respectively. For example, storage device 120 of FIG. 1 may be connected to connector 315, and computational storage unit 140 of FIG. 1 may be connected to connector 320.

Root ports 355 and 360 may interrogate devices connected to connectors 315 and 320 for information about those devices. For example, devices connected to connectors 315 or 320 may expose various functions identifying requests that may be made of the devices.

In some embodiments of the disclosure, these functions may include one or more physical functions (PFs) and/or one or more virtual functions (VFs). Each PF may represent a resource, such as a function offered by the device. Each VF may represent a function that is associated with a PF, but is "virtualized": that is, for a given PF there may be one more VFs. PFs and VFs may be discovered by when the devices are enumerated: this enumeration may be performed by root ports 355 and 360 rather than by processor 110 of FIG. 1. While PFs, VFs, endpoints, and root ports are concepts commonly associated with PCIe devices, embodiments of the disclosure may include similar concepts when using devices that connect to other busses.

Once the PFs and VFs are enumerated, this information may be provided to bridges 335 and 340, and eventually be provided back to multiplexer/demultiplexer 330 and/or endpoint 310. In this manner, endpoint 310 may be capable of exposing the functions (PFs, VFs, or both) of the various devices connected to connectors 315 and 320. If there are any conflicts between the functions exposed by the devices connected to connectors 315 and 320 (for example, identical function identifiers), multiplexer/demultiplexer 330 and/or endpoint 310 may change the enumerations to avoid such conflicts. For example, devices may enumerate the functions starting at zero: if the devices connected to connectors 315 and 320 were both assigned the function number starting at zero, multiplexer/demultiplexer 330 might not be able to determine for which device a particular request associated with function number zero is intended. Thus, for example, if the device connected to connector 315 has three PFs and the device connected to connector 320 has two PFs, multiplexer/demultiplexer 330 may assign the PFs to the device connected to connector 315 using numbers 0, 1, and 2, and may assign the PFs to the device connected to connector 320 using numbers 3 and 4. As long as no two PFs are assigned the same number, multiplexer/demultiplexer 330 may map functions in any desired manner. In addition, VFs exposed by the devices connected to connectors 315 and/or 320 may be exposed as VFs or PFs (that is, VFs of the devices may map to PFs exposed by multi-function device 135).

With this understanding the operation of multiplexer/demultiplexer 330 may now be understood. Upon receiving a request, message, or data from processor 110 of FIG. 1 via connector 305, multiplexer/demultiplexer 330 may determine the identifier of the function for which the data is relevant. For example, if the request is a write request intended for storage device 120 of FIG. 1, multiplexer/demultiplexer 330 may identify the write function in the write request, and may internally map that write function to storage device 120 of FIG. 1. Multiplexer/demultiplexer 330 may then route the write request to bridge 335 or bridge 340, depending on which bridge may lead to storage device 120 of FIG. 1. More information about how exposed functions of the devices attached to connectors 315 and 320 may be exposed by multi-function device 135 may be found in U.S. Patent Application Serial No. 16/846,271, filed April 10, 2020, now pending, which claims the benefit of U.S. Provisional Patent Application Serial No. 62/964,114, filed January 21, 2020, and U.S. Provisional Patent Application Serial No. 62/865,962, filed June 24, 2019.

While FIG. 3 shows multi-function device 135 as including three connectors 305, 315, and 320, which may connect to processor 110 of FIG. 1, storage device 120 of FIG. 1, and computational storage unit 140 of FIG. 1, embodiments of the disclosure may include any number of connectors. For example, multi-function device 135 may include four or more connectors: the additional connectors may connect to additional storage devices and/or computational storage units. Further, there may be any number (one or more) of storage devices and/or any number (one or more) of computational storage units connected to multi-function device 135 via connectors such as connectors 315 and 320. There is no requirement that the number of storage devices connected to multi-function device 135 be identical to the number of computational storage units connected to multi-function device 135. If multi-function device 135 includes more connectors than connectors 315 and 320, multi-function device 135 may also include additional bridges like bridges 335 and 340, additional asynchronous buffers like asynchronous buffers 345 and 350, and additional root ports like root ports 355 and 360, to support additional devices.

FIG. 3 also includes multiplexer/demultiplexer 365, which may be interposed between bridge 340 and asynchronous buffer 350. Multiplexer/demultiplexer 365 is used in peer-to-peer communication between the devices connected to connectors 315 and 320. That is, using multiplexer/demultiplexer 365, it is possible for the device attached to connector 320 to communicate with the device attached to connector 315 without having such communications to pass through processor 110 of FIG. 1 (via connector 305). To achieve this result, multiplexer/demultiplexer 365 may example information in a request, message, or data received at multiplexer/demultiplexer 365. Multiplexer/demultiplexer 365 may then identify any responses to such requests, messages, or data received from the device connected to connector 320, and may return such responses to the component that issued the original request, message, or data. For example, multiplexer/demultiplexer 365 may determine an identifier of the request, message, or data and the source from which the request, message, or data was received. Then, if multiplexer/demultiplexer 365 receives a response from the device connected to connector 320 associated with that identifier, multiplexer/demultiplexer 365 may send the response to the appropriate component.

As discussed above, in some embodiments of the disclosure, the devices connected to connectors 315 and 320 may be PCIe devices. In such embodiments of the disclosure, multiplexer/demultiplexer 365 may expect to process transaction layer packets (TLP).

In embodiments of the disclosure that support more than two devices connected to multi-function device 135, there may be a multiplexer/demultiplexer like multiplexer/demultiplexer 365 associated with devices attached to multi-function device 135. In some embodiments of the disclosure, such a multiplexer/demultiplexer may be interposed between a bridge like bridge 340 and an asynchronous buffer like asynchronous buffer 350 for all devices; in other embodiments of the disclosure, such a multiplexer/demultiplexer may be interposed between a bridge and an asynchronous buffer for computational storage units like computational storage unit 140 of FIG. 1 (but not for storage devices like storage device 120 of FIG. 1). Note that multiplexer/demultiplexer 365 and similar multiplexers/demultiplexers may be connected to some or all bridges like bridges 335 and 340, to support the exchange of data between various pairs of devices.

Note that multiplexer/demultiplexer 365 may receive requests, messages, and/or data from a device attached to connector 315, and from processor 110 of FIG. 1 attached to connector 305. In some embodiments of the disclosure, requests received by multiplexer/demultiplexer 365 from processor 110 of FIG. 1 and from the device attached to connector 315 may include tags that identify the request. For example, read requests may include a tag that identifies the request, so that data may be returned associated with the same tag. When such tagged requests are received from only one source, it may be expected that tags will not conflict: for example, multiplexer/demultiplexer 365 may reasonably assume that processor 110 of FIG. 1 would not assign the same tag to two different read requests. But when requests are received from multiple sources, unless the multiple sources coordinate their use of tags, it might happen that a request received from one source might have the same tag as a request received from another source. Upon receiving the data from computational storage unit 140 of FIG. 1, multiplexer/demultiplexer 365 might not be able to differentiate which device originated the read request: this situation could be a conflict.

There are several ways in which such a conflict might be avoided. One solution may be to process requests from only one source at a time, and the other source might wait until no requests from the first source are active. But this solution might not offer the best performance. Another solution may be to permit only requests with unique tags to be active at any time. Thus, so long as each request has a different tag from any other active requests, the request may be processed; if the request replicates a tag that is associated with another active request, the new request may be buffered until the active request with that tag is complete. This solution offers better performance. Yet another solution may be for multiplexer/demultiplexer 365 to provide tags that may be used by the various sources: so long as each source may be provided a set of tags that does not intersect with the set of tags assigned to another source, tag conflict may be avoided. Yet another solution may be for multiplexer/demultiplexer 365 to introduce a level of indirection, mapping tags from each source to new tags (used internally to multiplexer/demultiplexer 365). When a request is received, the tag may be mapped and the mapping from the original tag to the new tag may be stored in a table in multiplexer/demultiplexer 365. When the request is completed, multiplexer/demultiplexer 365 may determine the original tag from the new tag received with the response.

To support such operations, bridge 335 may also be capable of directing requests, messages, or data (whether received from processor 110 of FIG. 1 as received via connector 305 or from the device connected to connector 315) to multiplexer/demultiplexer 365. This situation may occur, for example, if the devices attached to connectors 315 and 320 may support direct memory addressing (DMA). For example, assume that storage device 120 of FIG. 1 is connected to connector 315 and computational storage unit 140 of FIG. 1 is connected to connector 320. If computational storage unit 140 of FIG. 1 includes a memory (such as a DRAM) and storage device 120 of FIG. 1 may issue a DMA request that may write data into that memory, bridge 335 may direct the DMA request to multiplexer/demultiplexer 365 (rather than to multiplexer/demultiplexer 330). In this manner processor 110 of FIG. 1 may be bypassed, which may result in the request being processed more expeditiously.

While having either storage device 120 of FIG. 1 or computational storage unit 140 of FIG. 1 read or write data directly from the other is useful, it is not always possible or practical. For example, to support DMA, one device may need a memory, and the other device may need a circuit to read data from or write data to that memory (in the first device). If either element is lacking (for example, if computational storage unit 140 of FIG. 1 includes neither memory nor a circuit to read or write a memory in storage device 120 of FIG. 1), then DMA might not be possible.

In addition, if DMA is used, then the devices may need to handle the data as stored, without processing. If the data may need processing before it is used, DMA might not be an option. For example, consider computational storage unit 140 of FIG. 1 operating to process video data. If computational storage unit 140 of FIG. 1 expects data to be in a particular format-for example, MPEG format-but the data is in another format-for example, WVM format-computational storage unit 140 of FIG. 1 might not be able to process the data unless the data is transcoded first. Or if data in a table is stored in column format but computational storage unit 140 of FIG. 1 expects the table to be stored in row format, the table might need to be transposed before computational storage unit 140 of FIG. 1 may process the data.

If storage device 120 of FIG. 1 includes a processor that may process the data so that it is in a format that may be used by computational storage unit 140 of FIG. 1, storage device 120 of FIG. 1 may process the data before DMA is used to transfer the data from storage device 120 of FIG. 1 to computational storage unit 140 of FIG. 1. But another approach may also be used.

Buffer 370 may be used to store data being transferred between the devices connected to connectors 315 and 320. Once the data is stored in buffer 370, data processor 375 may then process the data as appropriate before transfer to the destination device. Once the data in buffer 370 has been processed by data processor 375, the processed data may be transferred to the destination device. In some embodiments of the disclosure, DMA may be used by the devices to write data to or read data from buffer 370. Buffer 370 may use any desired form of storage: for example, DRAM, SRAM, or the like, and may be on-chip or offchip.

Data processor 375 may perform any desired processing on data in buffer 370. Data processor 375 may include a circuit and/or software to perform some expected processing. But data processor 375 may also be general enough to support processing as instructed by processor 110 of FIG. 1. That is, processor 110 of FIG. 1 may download a program to data processor 375, which may then execute that program on data in buffer 370 to transform the data into a format expected by the destination device.

As discussed above, in some embodiments of the disclosure data processing may be performed to put the data in a format appropriate for the device designated to receive the data. But in some embodiments of the disclosure, data processing may be performed even if the device designated to receive the data may be able to process the data. For example, the data might already be in a format that may be acceptable to the destination device, but there might be a more optimal format. In such embodiments of the disclosure, data processor 375 may process the data even though the data is already in a format that may be acceptable to the destination device.

In some embodiments of the disclosure, processor 110 of FIG. 1 may act as the scheduler. In such embodiments of the disclosure, processor 110 of FIG. 1 may send a request to the source device. Upon receiving a response from the source device, processor 110 of FIG. 1 may then signal data processor 375 to being processing the data in buffer 370. Once data processor 375 has completed the processing of the data in buffer 370, data processor 375 may signal processor 110 of FIG. 1 that the processing is complete, after which processor 110 of FIG. 1 may request that the destination device read the data from buffer 370.

In other embodiments of the disclosure, data processor 375 may act as a scheduler for the data transfer. Data processor 375 may send a request to the source device, asking that the data be transferred to buffer 370. Note that bridges 335 and 340 may access buffer 370, to effect writing data to (and reading data from) buffer 370. Once the transfer is complete, the source device may signal data processor 375 that the transfer is complete. Data processor 375 may then transform the data as appropriate. Once data processor 375 has finished transforming the data in buffer 370, data processor 375 may signal the destination device that the data is ready for retrieval, and the destination device may then read the data from buffer 370. Data processor 375 may receive such instructions regarding scheduling from processor 110 of FIG. 1. These instructions may be encoded using any desired protocol: a new protocol may also be designed to support such scheduling instructions.

When computational storage unit 140 of FIG. 1 processes a request from processor 110 of FIG. 1 (or an application running on processor 110 of FIG. 1), that processing may use data from buffer 370 (potentially as processed by data processor 375). But that processing may also involve data from processor 110. For example, if computational storage unit 140 of FIG. 1 is performing image recognition, the data from storage device 120 of FIG. 1 may include information about how to recognize various features of an image. But the image itself to be processed may be provided by processor 110 of FIG. 1. Or, if computational storage unit 140 of FIG. 1 is processing a query on a database, the database itself may come from storage device 120 of FIG. 1, but the query may be provided by processor 110 of FIG. 1. Thus, information processed by computational storage unit 140 of FIG. 1 may come from different sources via multi-function device 135.

As discussed above, multi-function device 135 may include more than two connectors 315 and 320, and therefore may include more than two attached devices. In some embodiments of the disclosure, some or all attached devices may have access to buffer 370, and may read data from or write data to buffer 370. In other embodiments of the disclosure, there may be any number (one or more) of buffers 370 (and possibly more than one data processor 375 as well). For example, there may a buffer 370 associated with each computational storage unit 140 of FIG. 1 connected to multi-function device 135. In that manner, data may be written to a buffer associated with the computational storage unit 140 of FIG. 1 that is expected to process the data. Note that buffer 370 may also be used to exchange data between two (or more) storage devices 120 of FIG. 1 attached to multi-function device 135, or between two (or more) computational storage units 140 of FIG. 1: embodiments of the disclosure are not limited to using buffer 370 to exchange data between storage device 120 of FIG. 1 and computational storage unit 140 of FIG. 1. There may be one or more data processors 375 as well: the number of data processors 375 may be one-to-one with the number of buffers 370, or the number of data processors 375 may differ from the number of buffers 370.

In some embodiments of the disclosure, peer-to-peer communication may use a PCIe protocol for communication. That is, bridges 335 and/or 340 may use the PCIe protocol for transmission of requests, messages, and/or data to and/or from the devices connected to connectors 315 and 320. In other embodiments of the disclosure, peer-to-peer communication may use other protocols. In some embodiments of the disclosure, the devices connected to connectors 315 and 320 may use different protocols for communication (although in such embodiments of the disclosure some mapping of requests, messages, or data formats and/or protocols between or among the protocols may be needed).

As noted above, computational storage unit 140 of FIG. 1 may, among other possibilities, be an NIC. When an NIC is connected to connector 320, storage device 120 of FIG. 1 (when connected to connector 315) may be able to communicate with the NIC via peer-to-peer communication (using, for example, buffer 370). Multi-function device 135 may therefore support communication between storage device 120 of FIG. 1 and the NIC without such communication necessarily passing through processor 110 of FIG. 1. Note that using an NIC as computational storage unit 140 of FIG. 1, and connecting the NIC to connector 320, does not prevent processor 110 of FIG. 1 from communicating with the NIC: processor 110 of FIG. 1 may still communicate with the NIC via multi-function device 135. In addition, if multi-function device 135 includes additional connectors, another computational storage unit 140 of FIG. 1 may also be connected to multi-function device 135, also enabling that computational storage unit 140 of FIG. 1 to communicate with the NIC without such communication passing through processor 110 of FIG. 1. In this manner, an NIC may be treated as a computational storage unit and combined with one or more storage devices and/or one or more other computational storage units 140 of FIG. 1.

While FIG. 3 shows connectors 315 and 320 and suggests that connectors 315 and 320 may permit the replacement of the attached devices, embodiments of the disclosure may include one or more of connectors 315 and 320 as permanent connectors. In addition, some embodiments of the disclosure may include both permanent and swappable connectors. For example, storage device 120 of FIG. 1 might be permanently affixed to connector 315 (perhaps via soldering), whereas computational storage unit 140 of FIG. 1 might be plugged into connector 320, which may support detaching and replacing computational storage unit 140 of FIG. 1. In some embodiments of the disclosure, swapping a device connected to connectors 315 or 320 may be performed as a hot-swap (that is, without powering down machine 105 of FIG. 1 to perform the replacement); in other embodiments of the disclosure, swapping a device connected to connectors 315 or 320 may involve powering machine 105 of FIG. 1 down before replacing the device.

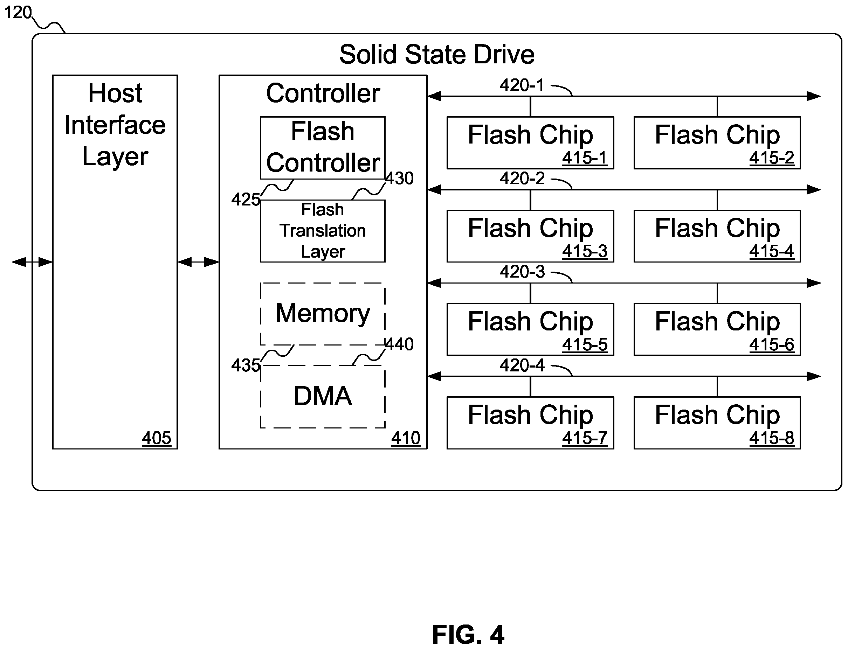

FIG. 4 shows details of storage device 120 of FIG. 1, according to embodiments of the disclosure. In FIG. 4, the implementation of storage device 120 is shown as for a Solid State Drive. In FIG. 4, storage device 120 may include host interface layer (HIL) 405, controller 410, and various flash memory chips 415-1 through 415-8 (also termed "flash memory storage"), which may be organized into various channels 420-1 through 420-4. Host interface layer 405 may manage communications between storage device 120 and other components (such as processor 110 of FIG. 1) Host interface layer 405 may also manage communications with devices remote from storage device 120: that is, devices that are not considered part of multi-function device 135 of FIG. 1, but in communication with storage device 120: for example, over one or more network connections. These communications may include read requests to read data from storage device 120, write requests to write data to storage device 120, and delete requests to delete data from storage device 120.

Host interface layer 405 may manage an interface across only a single port, or it may manage interfaces across multiple ports. Alternatively, storage device 120 may include multiple ports, each of which may have a separate host interface layer 405 to manage interfaces across that port. Embodiments of the inventive concept may also mix the possibilities (for example, an SSD with three ports might have one host interface layer to manage one port and a second host interface layer to manage the other two ports).

Controller 410 may manage the read and write operations, along with garbage collection and other operations, on flash memory chips 415-1 through 415-8 using flash memory controller 425. SSD controller 410 may also include flash translation layer 430, memory 435, and/or DMA controller 440. Flash translation layer 430 may manage the mapping of logical block addresses (LBAs) (as used by host 105 of FIG. 1) to physical block addresses (PBAs) where the data is actually stored on storage device 120. By using flash translation layer 430, host 105 of FIG. 1 does not need to be informed when data is moved from one block to another within storage device 120.

Memory 435 may be a local memory, such as a DRAM, used by storage controller 410. Memory 435 may be a volatile or non-volatile memory. Memory 435 may also be accessible via DMA from devices other than storage device 120: for example, computational storage unit 140 of FIG. 1. Memory 435 may be omitted, as shown by its representation using dashed lines.

DMA 440 may be a circuit that enables storage device 120 to execute DMA commands in a memory outside storage device 120. For example, DMA 440 may enable storage device 120 to read data from or write data to memory 115 of FIG. 1 or a memory in computational storage unit 140 of FIG. 1. DMA 440 may be omitted, as shown by its representation using dashed lines.

While FIG. 4 shows storage device 120 as including eight flash memory chips 415-1 through 415-8 organized into four channels 420-1 through 420-4, embodiments of the inventive concept may support any number of flash memory chips organized into any number of channels. Similarly, while FIG. 4 shows the structure of a SSD, other storage devices (for example, hard disk drives) may be implemented using a different structure from that shown in FIG. 4 to manage reading and writing data, but with similar potential benefits.

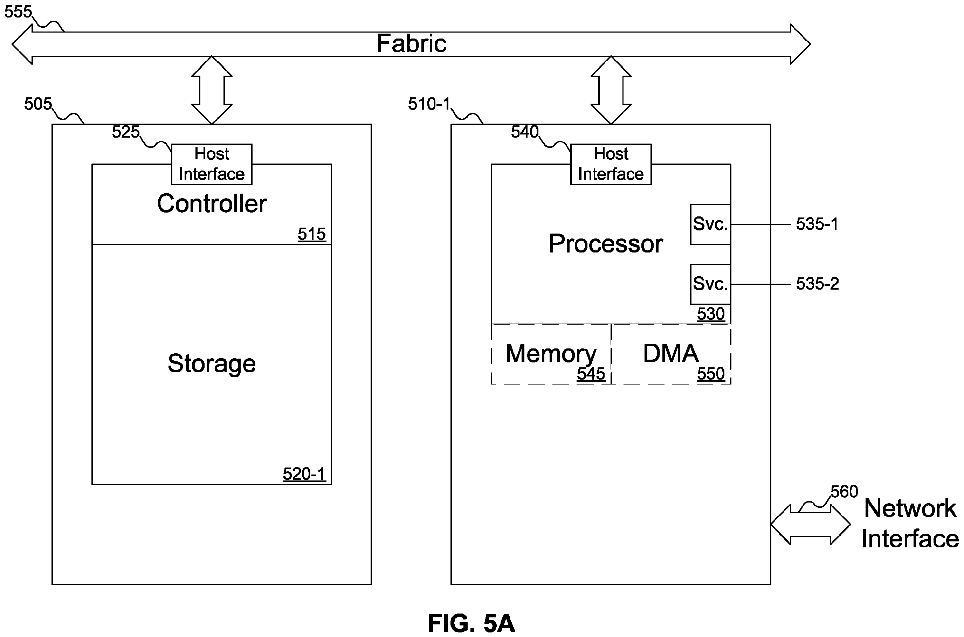

FIGs. 5A-5D shows example implementations of computational storage unit 140 of FIG. 1, according to embodiments of the disclosure. In FIG. 5A, storage device 505 and computational device 510-1 are shown. Storage device 505 may include controller 515 and storage 520-1, and may be reachable across a host protocol interface, such as host interface 525. Host interface 525 may be used both for management of storage device 505 and to control I/O of storage device 505. An example of host interface 525 may include queue pairs for submission and completion, but other host interfaces 525 are also possible, using any native host protocol supported by storage device 505.

Computational device 510-1 may be paired with storage device 505. Computational device 510-1 may include any number (one or more) processors 530, which may offer one or more services 535-1 and 535-2. To be clearer, each processor 530 may offer any number (one or more) services 535-1 and 535-2 (although embodiments of the disclosure may include computational device 510-1 including exactly two services 535-1 and 535-2). Each processor 530 may be a single core processor or a multi-core processor. Computational device 510-1 may be reachable across a host protocol interface, such as host interface 540, which may be used for both management of computational device 510-1 and/or to control I/O of computational device 510-1. As with host interface 525, host interface 540 may include queue pairs for submission and completion, but other host interfaces 540 are also possible, using any native host protocol supported by computational device 510-1. Examples of such host protocols may include Ethernet, RDMA, TCP/IP, InfiniBand, iSCSI, PCIe, SAS, and SATA, among other possibilities. In addition, host interface 540 may support communications with other components of system 105 of FIG. 1-for example, a NIC, if the NIC is not connected to multi-function device 135 of FIG. 1-or to operate as a NIC and communicate with local and/or remote network/cloud components.

Processor(s) 530 may be thought of as near-storage processing: that is, processing that is closer to storage device 505 than processor 110 of FIG. 1. Because processor(s) 530 are closer to storage device 505, processor(s) 530 may be able to execute commands on data stored in storage device 505 more quickly than for processor 110 of FIG. 1 to execute such commands. Processor(s) 530 may have associated memory 545, which may be used for local execution of commands on data stored in storage device 505. Memory 545 may also be used similarly to memory 435 of FIG. 4, and may be accessible by DMA from devices other than computational storage unit 410-1. Memory 545 may include local memory similar to memory 115 of FIG. 1, on-chip memory (which may be faster than memory such as memory 115 of FIG. 1, but perhaps more expensive to produce), or both.

Computational storage unit 410-1 may also include DMA 550. DMA 550 may be used similarly to DMA 440 of FIG. 4, and may be used to access memories in devices other than computational storage unit 410-1.

Depending on the implementation, memory 545 and/or DMA 550 may be omitted, as shown by the dashed lines.

While FIG. 5A shows storage device 505 and computational device 510-1 as being separately reachable across fabric 555, embodiments of the disclosure may also include storage device 505 and computational device 510-1 being serially connected, or sharing multi-function device 135 of FIG. 1 (as shown in FIG. 1). That is, commands directed to storage device 505 and computational device 510-1 might both be received at the same physical connection to fabric 555 and may pass through one device (or multi-function device 135 of FIG. 1) to reach the other. For example, if computational device 510-1 is located between storage device 505 and fabric 555, computational device 510-1 may receive commands directed to both computational device 510-1 and storage device 505: computational device 510-1 may process commands directed to computational device 510-1, and may pass commands directed to storage device 505 to storage device 505. Similarly, if storage device 505 is located between computational device 510-1 and fabric 555, storage device 505 may receive commands directed to both storage device 505 and computational device 510-1: storage device 505 may process commands directed to storage device 505 and may pass commands directed to computational device 510-1 to computational device 510-1.

Services 535-1 and 535-2 may offer a number of different functions that may be executed on data stored in storage device 505. For example, services 535-1 and 535-2 may offer pre-defined functions, such as encryption, decryption, compression, and/or decompression of data, erasure coding, and/or applying regular expressions. Or, services 535-1 and 535-2 may offer more general functions, such as data searching and/or SQL functions. Services 535-1 and 535-2 may also support running application-specific code. That is, the application using services 535-1 and 535-2 may provide custom code to be executed using data on storage device 505. Services 535-1 and 535-2 may also any combination of such functions. Table 1 lists some examples of services that may be offered by processor(s) 530.

**Table 1: Service Types**

| |
|---|
| Compression |
| Encryption |
| Database filter |
| Erasure coding |
| RAID |
| Hash/CRC |
| RegEx (pattern matching) |
| Scatter Gather |
| Pipeline |
| Video compression |
| Data deduplication |
| Operating System Image Loader |
| Container Image Loader |
| Berkeley packet filter (BPF) loader |
| FPGA Bitstream loader |
| Large Data Set |

Processor(s) 530 (and, indeed, computational device 510-1) may be implemented in any desired manner. Example implementations may include a local processor, such as a CPU or some other processor (such as an FPGA, an ASIC, or a SoC), a GPU, a GPGPU, a DPU, an NPU, an NIC, or a TPU, among other possibilities. Processor(s) 530 may also be implemented using an FPGA or an ASIC, among other possibilities. If computational device 510-1 includes more than one processor 530, each processor may be implemented as described above. For example, computational device 510-1 might have one each of CPU, TPU, and FPGA, or computational device 510-1 might have two FPGAs, or computational device 510-1 might have two CPUs and one ASIC, etc.

Depending on the desired interpretation, either computational device 510-1 or processor(s) 530 may be thought of as a computational storage unit.

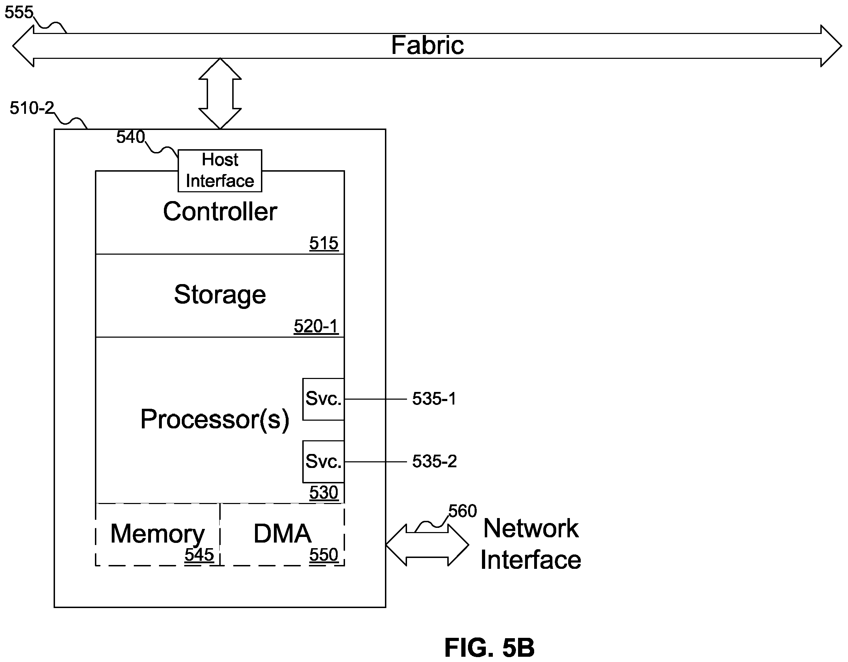

Some embodiments of the disclosure may include other mechanisms to communicate with storage device 505 and/or computational device 510-1. For example, storage device 505 and/or computational device 510-1 may include network interface 560, which may support communication with other devices using Ethernet, RDMA, TCP/IP, InfiniBand, SAS, iSCSI, or SATA, among other possibilities. Network interface 560 may provide another interface for communicating with storage device 505 and/or computational device 510-1. While FIG. 5A shows network interface 560 as providing communication to computational device 510-1, embodiments of the disclosure may include a network interface to storage device 505 as well. In addition, in some embodiments of the disclosure, such other interfaces may be used instead of host interfaces 525 and/or 540 (in which case host interfaces 525 and/or 540 may be omitted). Other variations, shown in FIGs. 5B-5D below, may also include such interfaces.

Whereas FIG. 5A shows storage device 505 and computational device 510-1 as separate devices, in FIG. 5B they may be combined. Thus, computational device 510-2 may include controller 515, storage 520-1, processor(s) 530 offering services 535-1 and 535-2, memory 545, and/or DMA 550. As with storage device 505 and computational device 510-1 of FIG. 5A, management and I/O commands may be received via host interface 540 and/or network interface 560. Even though computational device 510-2 is shown as including both storage and processor(s) 530, FIG. 5B may still be thought of as including a storage device that is associated with a computational storage unit.

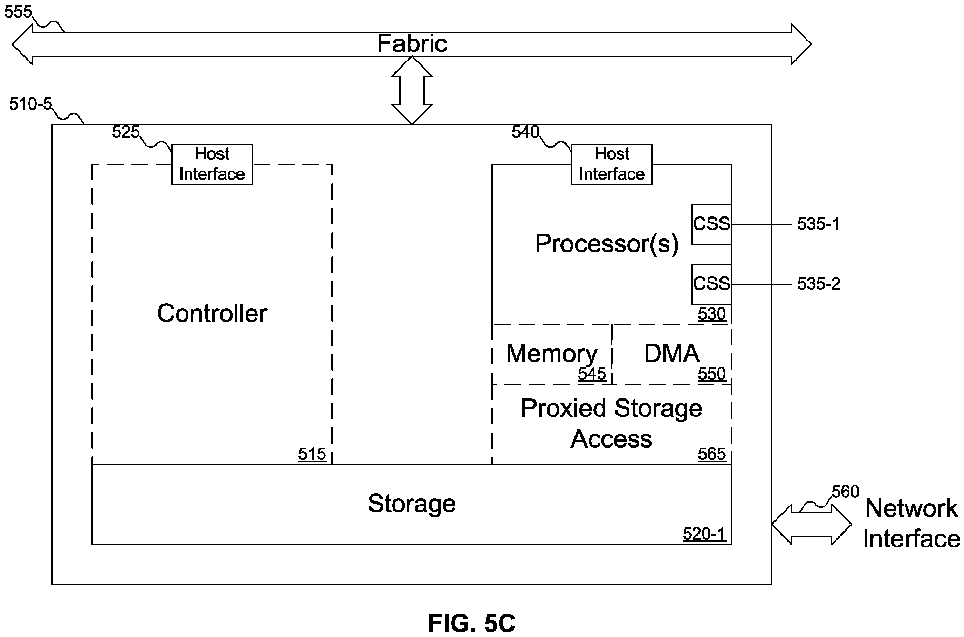

In yet another variation shown in FIG. 5C, computational device 510-5 is shown. Computational device 510-3 may include controller 515 and storage 520-1, as well as processor(s) 530 offering services 535-1 and 535-2, memory 545, and/or DMA 550. But even though computational device 510-3 may be thought of as a single component including controller 515, storage 520-1, processor(s) 530 (and also being thought of as a storage device associated with a computational storage unit), memory 545, and/or DMA 550, unlike the implementation shown in FIG. 5B controller 515 and processor(s) 530 may each include their own host interfaces 525 and 540 and/or network interface 560 (again, which may be used for management and/or I/O). By including host interface 525, controller 515 may offer transparent access to storage 520-1 (rather than requiring all communication to proceed through processor(s) 530).

In addition, processor(s) 530 may have proxied storage access 565 to storage 520-1. Thus, instead of routing access requests through controller 515, processor(s) 530 may be able to directly access the data from storage 520-1.

In FIG. 5C, both controller 515 and proxied storage access 565 are shown with dashed lines to represent that they are optional elements, and may be omitted depending on the implementation.

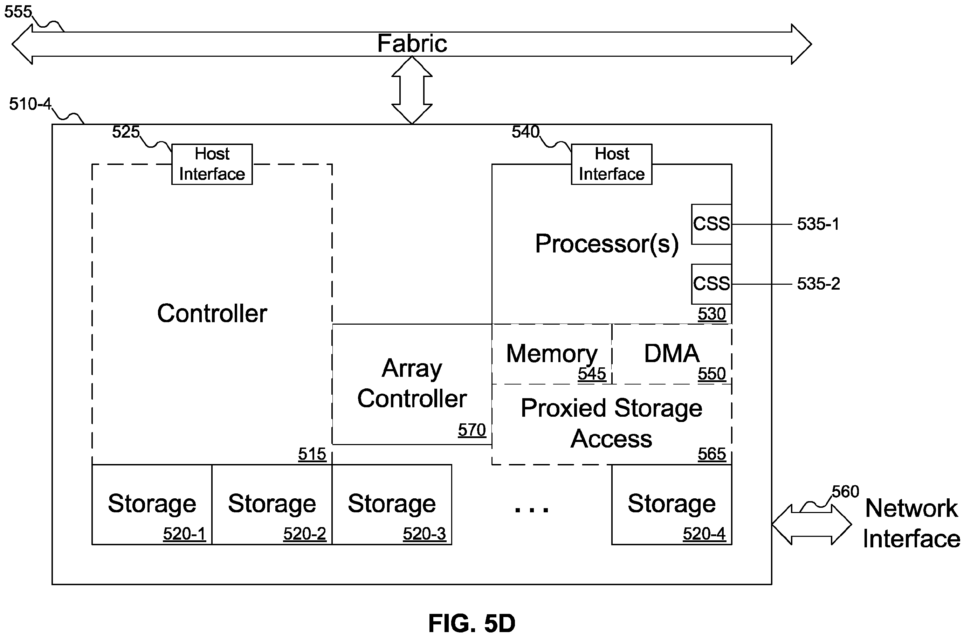

Finally, FIG. 5D shows yet another implementation. In FIG. 5D, computational device 510-4 is shown, which may include controller 515, memory 545, DMA 550, and proxied storage access 565 similar to FIG. 5C. In addition, computational device 510-4 may include an array of one or more storage 520-1 through 520-4. While FIG. 5D shows four storage elements, embodiments of the disclosure may include any number (one or more) of storage elements. In addition, the individual storage elements may be other storage devices, such as those shown in FIGs. 5A-5D.

Because computational device 510-4 may include more than one storage element 520-1 through 520-4, computational device 510-4 may include array controller 570. Array controller 570 may manage how data is stored on and retrieved from storage elements 520-1 through 520-4. For example, if storage elements 520-1 through 520-4 are implemented as some level of a Redundant Array of Independent Disks (RAID), array controller 570 may be a RAID controller. If storage elements 520-1 through 520-4 are implemented using some form of Erasure Coding, then array controller 570 may be an Erasure Coding controller.

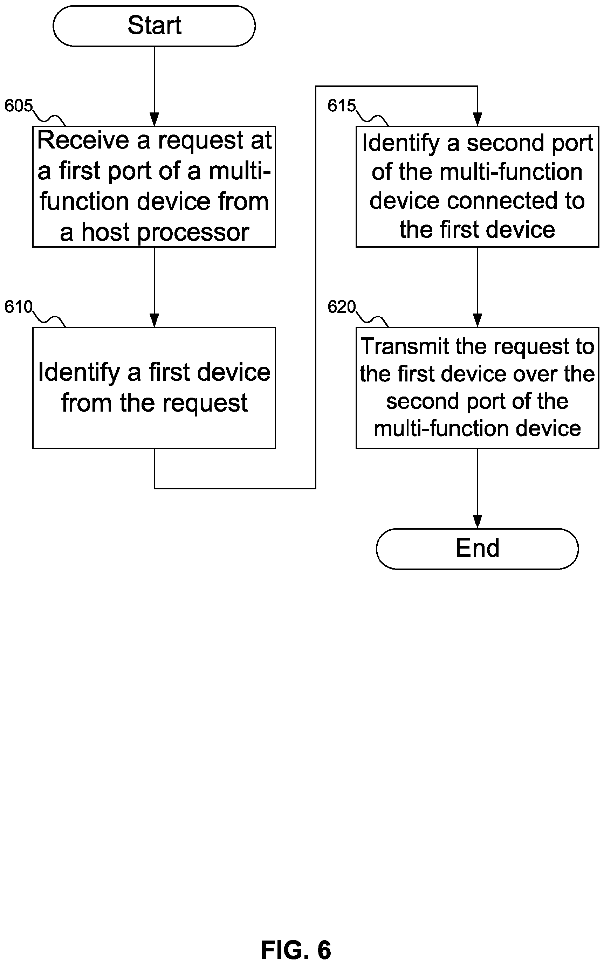

FIG. 6 shows a flowchart of an example procedure for using multi-function device 135 of FIG. 1 to deliver requests to storage device 120 of FIG. 1 and/or computational storage unit 140 of FIG. 1, according to embodiments of the disclosure. In FIG. 6, at block 605, multi-function device 135 of FIG. 1 may receive a request at port 310 of FIG. 3. At block 610, multiplexer/demultiplexer 330 of FIG. 3 may identify a device from the request. At block 615, multiplexer/demultiplexer 330 of FIG. 3 may identify port 355 of FIG. 3 or port 360 of FIG. 3 as being connected to the device identified from the request. At block 620, multiplexer/demultiplexer 330 of FIG. 3, bridge 335 of FIG. 3 or bridge 340 of FIG. 3, and port 355 of FIG. 3 or port 360 of FIG. 3 may transmit the request to the device identified from the request.

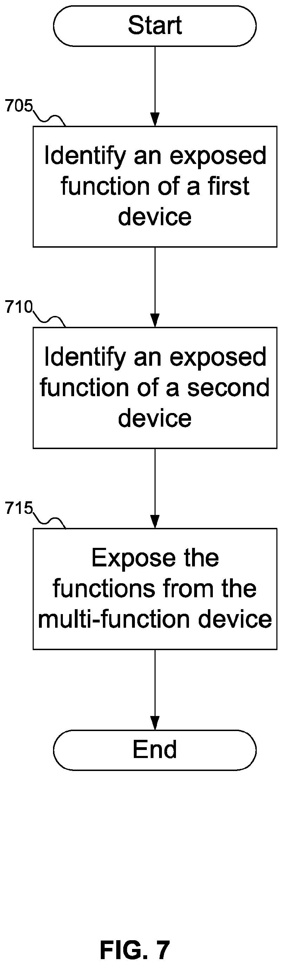

FIG. 7 shows a flowchart of an example procedure for using multi-function device 135 of FIG. 1 to identify exposed functions of the storage device 120 of FIG. 1 and/or computational storage unit 140 of FIG. 1, according to embodiments of the disclosure. In FIG. 7, at block 705, root port 355 of FIG. 3 may identify a function exposed by the device connected to connector 315 of FIG. 3. At block 710, root port 360 of FIG. 3may identify a function exposed by the device connected to connector 320 of FIG. 3. At block 715, endpoint 310 of FIG. 3 may expose the functions as from multi-function device 135 of FIG. 1.

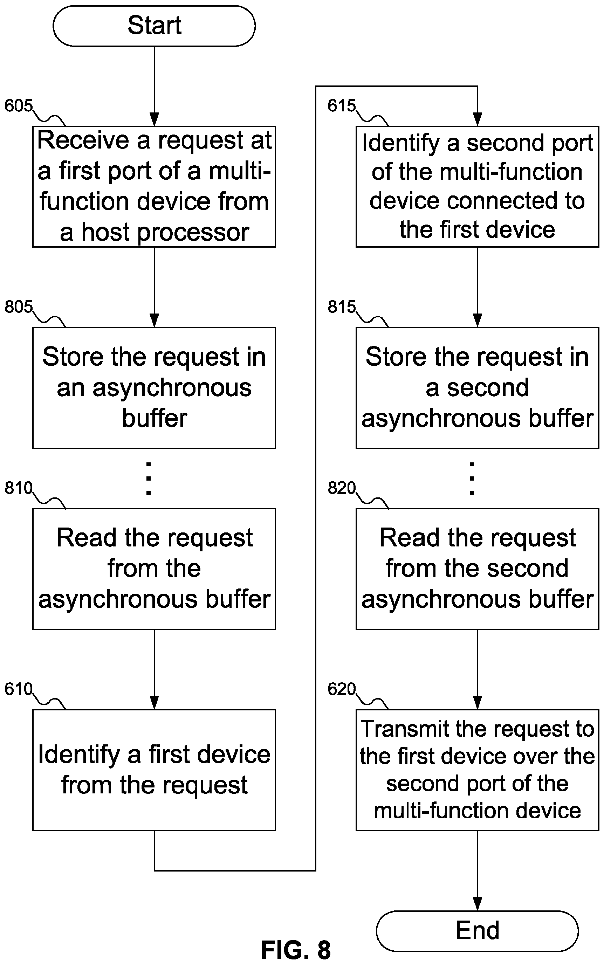

FIG. 8 shows a flowchart of an example procedure for using the asynchronous buffers of FIG. 3, according to embodiments of the disclosure. In FIG. 8, at block 605, multi-function device 135 of FIG. 1 may receive a request at port 310 of FIG. 3. Block 605 uses the same identifier as block 605 of FIG. 6 as the operations described are the same. At block 805, multi-function device 135 of FIG. 1 may store the request in asynchronous buffer 325 of FIG. 3.

At block 810, at some later time, multiplexer/demultiplexer 330 of FIG. 3 may read the request from asynchronous buffer 325 of FIG. 3. At block 610, multiplexer/demultiplexer 330 of FIG. 3 may identify a device from the request. At block 615, multiplexer/demultiplexer 330 of FIG. 3 may identify port 355 of FIG. 3 or port 360 of FIG. 3 as being connected to the device identified from the request. Blocks 610 and 615 use the same identifiers as blocks 610 and 615 of FIG. 6 as the operations described are the same. At block 815, bridge 335 of FIG. 3 or bridge 340 of FIG. 3 may store the request in asynchronous buffer 345 of FIG. 3 or asynchronous buffer 350 of FIG. 3.

At block 820, at some later time, root port 355 of FIG. 3 may read the request from asynchronous buffer 345 of FIG. 3, or root port 360 of FIG. 3 may read the request from asynchronous buffer 350 of FIG. 3. At block 620, root port 355 of FIG. 3 or root port 360 of FIG. 3 may transmit the request to the device identified from the request. Block 620 uses the same identifier as block 620 of FIG. 6 as the operations described are the same.

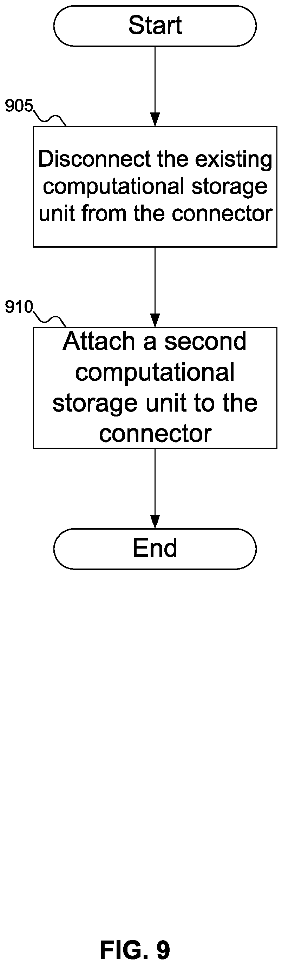

FIG. 9 shows a flowchart of an example procedure for replacing computational storage unit 140 of FIG. 1 with another computational storage unit, according to embodiments of the disclosure. At block 905, computational storage unit 140 of FIG. 1 may be disconnected from connector 320 of FIG. 3. At block 910, a new computational storage unit may be connected to connector 320 of FIG. 3.

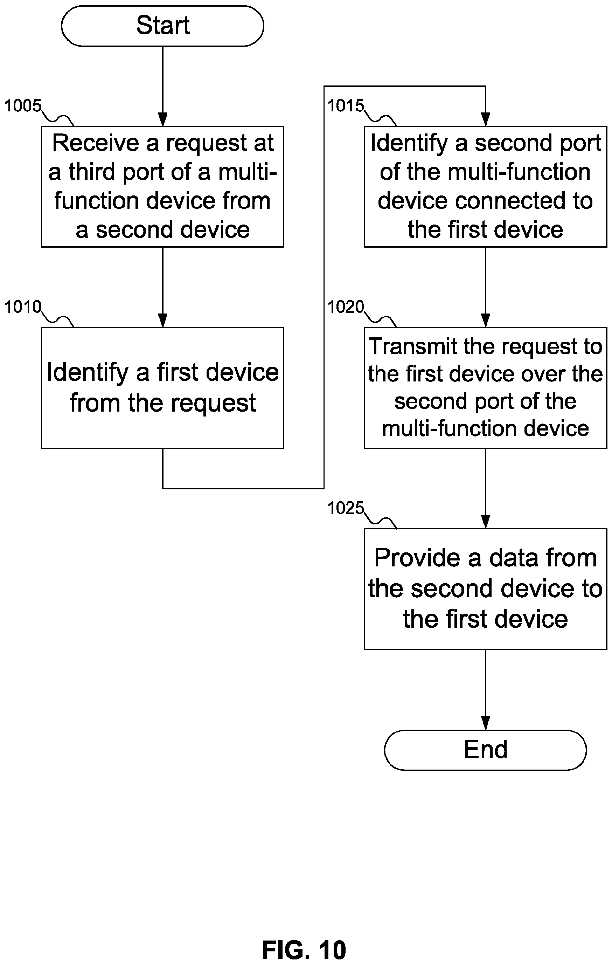

FIG. 10 shows a flowchart of an example procedure for using multi-function device 135 of FIG. 1 to deliver requests between devices attached to multi-function device 135 of FIG. 1, according to embodiments of the disclosure. At block 1005, multi-function device 135 of FIG. 1 may receive a request from a device connected to a port of multi-function device 135 of FIG. 1. Note that the device in question may be connected using port 355 of FIG. 3 or port 360 of FIG. 3, or other ports connected to other storage devices or computational storage units, rather than processor 110 of FIG. 1 connected to port 310 of FIG. 3. At block 1010, At block 1010, bridge 335 of FIG. 3 or bridge 340 of FIG. 3 may identify a device from the request. At block 1015, bridge 335 of FIG. 3 or bridge 340 of FIG. 3 may identify port 355 of FIG. 3 or port 360 of FIG. 3 as being connected to the device identified from the request. At block 1020, bridge 335 of FIG. 3 or bridge 340 of FIG. 3 may transmit the request to the device identified from the request. Finally, at block 1025, the device that sent the original request may provide data to the device identified in the request.

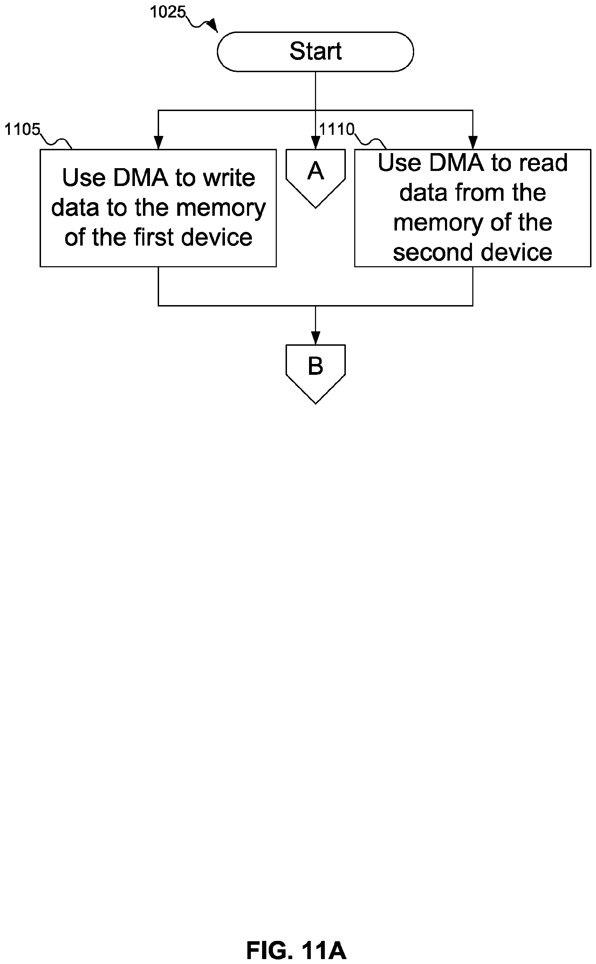

FIGs. 11A-11B show a flowchart of an example procedure for devices attached to multi-function device 135 of FIG. 1 to share data, according to embodiments of the disclosure. In FIG. 11A, at block 1105, one device may use DMA 440 of FIG. 4 or DMA 550 of FIGs. 5A-5D to write data to memory 435 of FIG. 4 or memory 545 of FIGs. 5A-5D. Alternatively, at block 1110, one device may use DMA 440 of FIG. 4 or DMA 550 of FIGs. 5A-5D to read data from memory 435 of FIG. 4 or memory 545 of FIGs. 5A-5D.

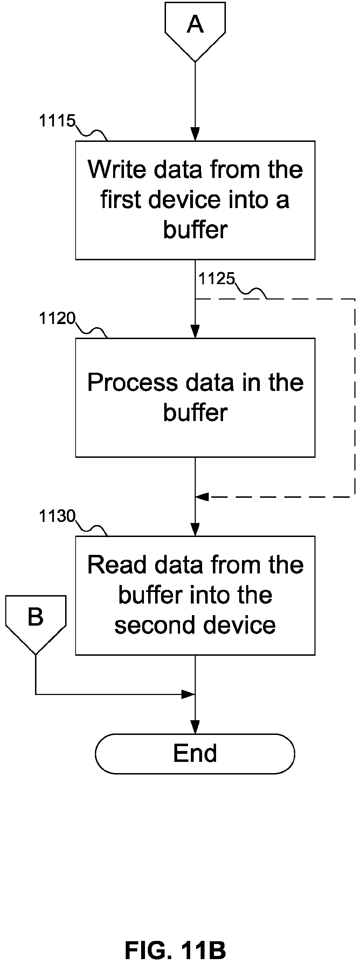

Alternatively, at block 1115 (FIG. 11B), one device may write data into buffer 370 of FIG. 3. At block 1120, data processor 375 of FIG. 3 may process the data in buffer 370 of FIG. 3, perhaps to put the data in a format that may be processed by the other device. Note that block 1120 is optional, as shown by dashed line 1125. Finally, at block 1130, the second device may read the data from buffer 370 of FIG. 3.

In FIGs. 6-11B, some embodiments of the disclosure are shown. But a person skilled in the art will recognize that other embodiments of the disclosure are also possible, by changing the order of the blocks, by omitting blocks, or by including links not shown in the drawings. All such variations of the flowcharts are considered to be embodiments of the disclosure, whether expressly described or not.

Embodiments of the disclosure include a multi-function device. One or more storage devices, and one or more computational storage units, may be connected to the multi-function device. The multi-function device presents the connected storage devices and computational storage units to the host processor as though they were one device and exposing all functions offered by the attached devices, providing a technical advantage over attaching multiple individual devices to the host processor.

The multi-function device may also include a buffer, permitting data to be exchanged between the attached devices without passing through the host processor. The multi-function device may also include a data processor that may be used to transform the data as passed between the devices. The use of the buffer provides a technical advantage by removing the host processor and host memory from the process of passing data between the devices, thereby potentially expediting data transfer.

In storage, data processing is an emerging technology. Solid State Drives (SSDs) have become important components in persistent data storage for modern IT infrastructure. Data is being generated by various applications such as Internet of Things (IOT), social networks, autonomous vehicles, and so on. Processing large amounts of data in an efficient manner is important. Such data processing may involve resources such as CPU cycles, memory bandwidth, network bandwidth, and power, among others.

Embodiments of the disclosure may include a multi-function device 135 of FIG .1, including a Computational Storage SSD architecture for providing a multitude of compute resources. Embodiments of the disclosure may provide for moving large quantities of data to Central Processing Units (CPUs) for processing and may minimize needs expensive system resources such as power, CPU cycles, network bandwidth, and host memory.

Computational Storage is emerging technology that enables efficient data processing inside or near to the SSD. Embodiments of the disclosure enable a more efficient solution of the compute requirements without requiring different product stock keeping units (SKU's). The multi-function device 135 of FIG. 1 may implement an architecture that enables many different computer resources that can be matched to the needs of an application. Embodiments of the disclosure may include a flexible SSD architecture for computational storage. Embodiments of the disclosure may enable a pluggable module for a compute resource to be inserted into the base SSD controller board. Embodiments of the disclosure may enable usage of many different compute resources such as Field Programmable Gate Arrays (FPGAs), Graphic Processing Units (GPUs), Tensor Processing Units (TPUs), Neural Processing Units (NPUs), Network Interface Cards (NICs), Central Processing Units (CPUs), Systems on Chip (SoCs), and Application-Specific Integrated Circuits (ASICs) to be presented to the host as a multi-function device 135 of FIG. 1 in addition to the SSD controller. One Peripheral Component Interconnect Express (PCIe) physical function (PF) may be used to expose the NVMe controller for storage input/output (I/O) operation. Another PCIe PF may be used to expose desired compute resources to the host. The peer-to-peer data transfers between the SSD controller and the compute resource may be done inside the multi-function device 135 of FIG. 1. Such an architecture may enables optimized computational storage solution to different use cases.

Some embodiments of the disclosure may include a multi-function flexible SSD for computational storage applications. Some embodiments of the disclosure may include 1 or more PFs for storage I/O operations (NVMe). Some embodiments of the disclosure may include 1 or more PFs compute resources. Some embodiments of the disclosure may attach compute resources using a connector, so the compute resources may be replaced if required. Some embodiments of the disclosure may include peer-to-peer data transfers between the SSD controller and compute resource transparent to host. Some embodiments of the disclosure may include a PCIe Base Address Register (BAR) window or address range programmed by host software in a PCIe Bridge to the compute resource, which may be used as a Peer-to-Peer (P2P) address range. Some embodiments of the disclosure may enable the host and the SSD Controller to access the compute resource concurrently. Some embodiments of the disclosure may include host and SSD Controller Read Request Tag conflict management for P2P Direct Memory Access (DMA). Some embodiments of the disclosure may include concurrent storage I/Os and compute transactions. Some embodiments of the disclosure may allow a customer to use their own proprietary interface to the compute resource. Some embodiments of the disclosure may include Parallel PCIe-to-PCIe bridge(s), which may be used to connect to the SSD controller and the compute resource. Some embodiments of the disclosure may include Compute Resource PF BAR range used for P2P data transfers. Some embodiments of the disclosure may include many different kinds of compute resources: FPGA, ASIC, SoC, CPU, GPU, SoC, TPU, NPU, NIC, etc.

Embodiments of the disclosure may provide a number of advantages, such as the flexibility of computational storage SSD; an optimized solution for specific use cases; allowing customers to use their own, proprietary interface to the compute; and/or may allow easy and fast integration with existing customer system software stack.

An exemplary embodiment includes a system and method of flexible computational storage device. The emerging technology of computational storage aspires to eliminate or reduce large data transfers to the host memory for processing. The basic idea of computational storage is to process the data in or near the SSD itself and only transfer the results to the host. The use of compute resources may be expected to reduce power consumption, latency, CPU utilization, host bus bandwidth, host memory bandwidth, and other system resources.

In some embodiments of the disclosure, to achieve data processing inside or near the storage device, one or more compute resources may be integrated in or located near the storage device. Some examples of compute resource may include FPGA, ASIC, SoC, GPU, TPU, NPU, NIC, etc. Different applications may use different computational resources. In some embodiments of the disclosure, it may be cost effective to implement two or more such compute resources in a single computational storage device. In some embodiments of the disclosure, it may be more efficient to minimize the variety of computational storage devices or SKU's. Hence embodiments of the disclosure may enable a variety of compute elements to be integrated in or located near to an SSD using a connector. Such a multi-function device 135 of FIG. 1 may permit a variety of compute resources to be inserted on an as-needed basis.

The multi-function device 135 of FIG. 1 may include: a PCIe End Point that may advertise two or more Physical Functions (PF); a PCIe Root Port that may configure the end points attached to it, *i.e.,* NVMe controller end-point and Compute Resource end-point; an Asynchronous First-In-First-Out memory that may enable clock boundary crossing between the PCIe clock and the local FPGA clock; a Multiplexer/Demultiplexer (PF) that may operate using a PF identifier value to forward or merge PCIe packets from PCIe bridge-storage and PCIe bridge-compute; a PCIe-PCIe bridge-compute module that may be used to perform pass-through of PCIe transactions between the host and the compute resource: the PCIe-PCIe bridge-compute module also may implement certain functions related to P2P data transfer between the storage device and the compute resource; a PCIe-PCIe bridge-storage module that may be used to perform pass-through of PCIe transactions between the host and the NVMe SSD Controller; the PCIe-PCIe bridge-storage module may also implement certain functions related to P2P data transfer between the storage device and the compute resource; and a Multiplexer/Demultiplexer (TLP) that may multiplex and de-multiplex host-compute resource and SSD controller-compute resource traffic transition layer packets (TLPs).

Embodiments of the disclosure may allow the compute resources to be advertised to the host using a PCIe multi-function device 135 of FIG. 1. One PCIe Physical Function (PF0) may be used to advertise a storage function based on the NVMe protocol. A separate physical function (PF1) may be used to advertise a compute function of a compute resource. In other embodiments of the disclosure, there may be two or more PFs used for storage (NVMe controllers), as well as two or more PFs used to integrate multiple compute elements.

In some embodiments of the disclosure, the NVMe controller as well as the compute resource may be connected to the host using PCIe-to-PCIe bridges as shown in FIG. 3. An FPGA may be used to implement two or more PCIe-to-PCIe bridges. Each PCIe bridge may pass host PCIe TLPs received on the End Point (EP) to the Root Ports (RPs) for the NVMe controller and compute resource.

The PCIe bridges may perform some or all of these functions: In some embodiments of the disclosure, the PCIe bridge may advertise multiple PCIe EP PFs to the host with configurations matching the NVMe controller and/or compute resource; In some embodiments of the disclosure, the PCIe bridge may perform the PCIe configuration of the NVMe controller and/or the compute resource end points; In some embodiments of the disclosure, the PCIe bridge may mirror the host PCIe configuration cycles to the NVMe controller and/or the compute resource PCIe end points; In some embodiments of the disclosure, the PCIe bridge may forward PCIe TLPs to/from the host and the NVMe controller or the compute resource; In some embodiments of the disclosure, the PCIe bridge may perform address translations for the pass-through TLPs.

In some embodiments of the multi-function device 135 of FIG. 1, peer-to-peer data movement between the storage device and the compute resource may be performed. In some embodiments of the disclosure, the PCIe bridge used for the compute resource may provide the address range used for data movement to the PCIe bridge used for the SSD controller. The P2P address range may be part of the PCIe BAR window or a range programmed by host software in the PCIe bridge. This address range and other related information may be termed as P2P control.

In some embodiments of the disclosure, the PCIe bridge-storage may take the P2P control information and may intercept all the TLPs coming from the NVMe SSD controller that fall in the P2P address range. The intercepted P2P PCIe transactions (Memory Write, and Memory Read) then may be presented to the Multiplexer/Demultiplexer module on the Root Port side. This Multiplexer/Demultiplexer module may merge TLPs coming from the host and coming from the PCIe bridge-storage and destined for the compute resource. This module may allow the host and the PCIe bridge-storage to concurrently access the compute resource. For Write transactions, which may be posted transactions, a simple TLP multiplexing may achieve the desired functionality. For Read Requests, which may be non-posted, completions packets coming back from the compute resource may be separated for the host and the PCIe bridge-storage. Such separation may be achieved using a Read Request tag value contained in each Read Request. However, conflicting tag values between the host and the PCIe bridge-storage may need to be managed, and multiple ways to handle Read Request tag conflict may be used.

In some embodiments of the disclosure, the completion packets in response to memory Read requests from the PCIe bridge-storage may be separated and sent to the PCIe bridge-storage, which in turn may forward them to the SSD controller. The Multiplexer/Demultiplexer module may keep track of Memory Read Request tags belonging to host Read requests and PCIe bridge-storage Read requests. Some embodiments of the disclosure may check that the Read Request tags do not conflict. Some embodiments of the disclosure may check that only one unique tag is active at any given time. In some embodiments of the disclosure, the multi-function device 135 of FIG. 1 may allow only one agent (host or PCIe bridge-storage) to issue a Read Request to the compute r. In other embodiments of the disclosure, the Multiplexer/Demultiplexer module may keep track of active read tags and may perform look-ups in a table for all the Read Requests from the host as well as from the PCIe bridge-storage. In some embodiments of the disclosure, if the same tag is found be already active, the Multiplexer/Demultiplexer module may delay that request until the active tag is freed up. In some embodiments of the disclosure, if no conflict is found, the Multiplexer/Demultiplexer module may allow multiple concurrent Read Requests to be sent to the compute resource. In some embodiments of the disclosure, it may be possible to allocate two sets of Read Request Tag values to the Host and the PCIe bridge-storage so that tag conflict may be avoided. In some embodiments of the disclosure, the Multiplexer/Demultiplexer module may perform one level of indirection or translation of the incoming Read Request tags such that no tag conflict happens. The original incoming tag and translated tag values may be kept in a table and translation may be performed in both directions: Read Requests to compute resource, and Completions coming back from compute resource.

Some embodiments of the disclosure enable the SSD controller to perform Direct Memory Access (DMA) operations to the compute resource memory without burdening the host CPU. Embodiments of the disclosure may include some or all of these features: a multi-function flexible SSD for computational storage applications; 1 or more PFs for storage I/O operations (NVMe); 1 or more PFs for compute resources; compute resources may be attached using a connector, so that compute resources may be replaced if required; peer-to-peer data transfers between the SSD controller and the compute resource may be transparent to the host; a PCIe BAR window or address range programmed by host software in the PCIe bridge that be used as P2P address range; the host and the SSD controller may access the compute resource concurrently; Read Request Tag conflict management between the host and the SSD controller for P2P DMA; concurrent storage I/Os and compute transactions; a customer may use a proprietary interface to the compute resource; parallel PCIe to-PCIe bridge(s) used to connect to the SSD controller and the compute resource; compute resource PF BAR range used for P2P data transfers; many different kinds of compute resources: FPGA, ASIC, SoC, CPU, GPU, TPU, NPU, NIC, etc.

The following discussion is intended to provide a brief, general description of a suitable machine or machines in which certain aspects of the disclosure may be implemented. The machine or machines may be controlled, at least in part, by input from conventional input devices, such as keyboards, mice, etc., as well as by directives received from another machine, interaction with a virtual reality (VR) environment, biometric feedback, or other input signal. As used herein, the term "machine" is intended to broadly encompass a single machine, a virtual machine, or a system of communicatively coupled machines, virtual machines, or devices operating together. Exemplary machines include computing devices such as personal computers, workstations, servers, portable computers, handheld devices, telephones, tablets, etc., as well as transportation devices, such as private or public transportation, e.g., automobiles, trains, cabs, etc.

The machine or machines may include embedded controllers, such as programmable or non-programmable logic devices or arrays, Application Specific Integrated Circuits (ASICs), embedded computers, smart cards, and the like. The machine or machines may utilize one or more connections to one or more remote machines, such as through a network interface, modem, or other communicative coupling. Machines may be interconnected by way of a physical and/or logical network, such as an intranet, the Internet, local area networks, wide area networks, etc. One skilled in the art will appreciate that network communication may utilize various wired and/or wireless short range or long range carriers and protocols, including radio frequency (RF), satellite, microwave, Institute of Electrical and Electronics Engineers (IEEE) 802.11, Bluetooth^{®}, optical, infrared, cable, laser, etc.

Embodiments of the present disclosure may be described by reference to or in conjunction with associated data including functions, procedures, data structures, application programs, etc. which when accessed by a machine results in the machine performing tasks or defining abstract data types or low-level hardware contexts. Associated data may be stored in, for example, the volatile and/or non-volatile memory, e.g., RAM, ROM, etc., or in other storage devices and their associated storage media, including hard-drives, floppy-disks, optical storage, tapes, flash memory, memory sticks, digital video disks, biological storage, etc. Associated data may be delivered over transmission environments, including the physical and/or logical network, in the form of packets, serial data, parallel data, propagated signals, etc., and may be used in a compressed or encrypted format. Associated data may be used in a distributed environment, and stored locally and/or remotely for machine access.

Embodiments of the disclosure may include a tangible, non-transitory machinereadable medium comprising instructions executable by one or more processors, the instructions comprising instructions to perform the elements of the disclosures as described herein.

The various operations of methods described above may be performed by any suitable means capable of performing the operations, such as various hardware and/or software component(s), circuits, and/or module(s). The software may comprise an ordered listing of executable instructions for implementing logical functions, and may be embodied in any "processor-readable medium" for use by or in connection with an instruction execution system, apparatus, or device, such as a single or multiple-core processor or processorcontaining system.

The blocks or steps of a method or algorithm and functions described in connection with the embodiments disclosed herein may be embodied directly in hardware, in a software module executed by a processor, or in a combination of the two. If implemented in software, the functions may be stored on or transmitted over as one or more instructions or code on a tangible, non-transitory computer-readable medium. A software module may reside in Random Access Memory (RAM), flash memory, Read Only Memory (ROM), Electrically Programmable ROM (EPROM), Electrically Erasable Programmable ROM (EEPROM), registers, hard disk, a removable disk, a CD ROM, or any other form of storage medium known in the art.

## Claims

1. A multi-function device (135), comprising:
a first port (310) configured to communicate with a host processor (110);
a second port (355) configured to communicate with a storage device (120);
a third port (360) configured to communicate with a computational storage unit (140);
a first circuit configured to route a message from the host processor (110) to at least one of the storage device (120) or the computational storage unit (140);
the multi-function device (135) further comprising a second circuit for peer-to-peer communication, wherein the second circuit includes a third circuit for communication between the storage device (120) and the computational storage unit (140); and
the multi-function device (135) further comprising a first multiplexer/demultiplexer (365) configured to enable the computational storage unit (140) to communicate with the host processor (110) and the storage device (120).

2. The multi-function device (135) according to claim 1, wherein the first circuit includes a second multiplexer/demultiplexer (330) configured to identify the at least one of the storage device (120) or the computational storage unit (140) as a destination for the message based at least in part on a data in the message.

3. The multi-function device (135) according to claim 2, wherein the first circuit further includes:
a first bridge (335) connected to the second port (355); and
a second bridge (340) connected to the third port (360),
wherein the second multiplexer/demultiplexer (330) is configured to route the message to at least one of the first bridge (335) or the second bridge (340) based at least in part on the data in the message.

4. The multi-function device (135) according to any one of claims 1 to 3, wherein:
the first port (310) includes an endpoint;
the second port (355) includes a first root port; and
the third port (360) includes a second root port.

5. The multi-function device (135) according to claim 4, wherein:
the first root port is configured to identify at least a first exposed function of the storage device (120);
the second root port is configured to identify at least a second exposed function of the computational storage unit (140); and
the endpoint is configured to expose at least the first exposed function and the second exposed function,
wherein the first exposed function includes at least one of a Physical Function, PF, or a Virtual Function, VF, and wherein the second exposed function includes at least one of a PF or a VF.

6. The multi-function device (135) according to any one of claims 1 to 5, wherein the second circuit includes a buffer to store data to be shared with the computational storage unit (140).

7. The multi-function device (135) according to any one of claims 1 to 6, wherein the computational storage unit (140) includes a network interface card, NIC.

8. The multi-function device (135) according to any one of claims 1 to 7, wherein the multi-function device (135) is configured to communicate with at least one of the host processor (110), the storage device (120) or the computational storage unit (140) using a protocol, the protocol including at least one of Peripheral Component Interconnect Express, PCIe, Ethernet, Remote Direct Memory Access, RDMA, Transmission Control Protocol/Internet Protocol, TCP/IP, InfiniBand, Serial Attached Small Computer System Interface, SCSI,, SAS, Internet SCSI, iSCSI, or Serial AT Attachment, SATA.

9. A method, comprising:
receiving a request at a first port (310) of a multi-function device (135) from a host processor (110);
identifying a first device from the request;
identifying a second port (355) of the multi-function device (135) connected to the first device; and
transmitting the request to the first device over the second port (355) of the multi-function device (135),
wherein the multi-function device (135) includes a third port (360) connected to a second device
the first device is drawn from a set including a storage device (120) or a computational storage unit (140); and
the second device is drawn from the set including the storage device (120) or the computational storage unit (140),
wherein the multi-function device (135) comprises:
a first circuit to route the request from the host processor (110) to at least one of the storage device (120) or the computational storage unit (140);
the multi-function device (135) further comprising a second circuit for peer-to-peer communication, wherein the second circuit includes a third circuit for communication between the storage device (120) and the computational storage unit (140); and
the multi-function device (135) further comprising a first multiplexer/demultiplexer (365) configured to enable the computational storage unit (140) to communicate with the host processor (110) and the storage device (120).

10. The method according to claim 9, wherein:
receiving the request at the first port (310) of the multi-function device (135) from the host processor (110) includes receiving the request at an endpoint of the multi-function device (135) from the host processor (110);
transmitting the request to the first device over the second port (355) of the multi-function device (135) includes transmitting the request to the first device over a root port of the multi-function device (135).

11. The method according to claim 10, wherein:
the third port (360) includes a second root port of the multi-function device (135); and
the method further comprises:
identifying at least a first exposed function of the first device over the root port;
identifying at least a second exposed function of the second device over the second root port; and
exposing at least the first exposed function and the second exposed function to the host processor (110) at the endpoint of the multi-function device (135),
wherein the first exposed function includes at least one of a Physical Function, PF, or a Virtual Function, VF, and wherein the second exposed function includes at least one of a PF or a VF.

12. The method according to any one of claims 9 to 11, further comprising providing a data from the second device to the first device.

## Patentansprüche

1. Multifunktionsvorrichtung (135), die folgendes aufweist:
einen ersten Port (310), der so konfiguriert ist, dass er mit einem Host-Prozessor (110) kommuniziert;
einen zweiten Port (355), der so konfiguriert ist, dass er mit einer Speichervorrichtung (120) kommuniziert;
einen dritten Port (360), der so konfiguriert ist, dass er mit einer rechnergestützten Speichereinheit (140) kommuniziert;
eine erste Schaltung, die so konfiguriert ist, dass sie eine Nachricht von dem Host-Prozessor (110) an mindestens eine der Speichervorrichtungen (120) oder die rechnergestützte Speichereinheit (140) weiterleitet;
wobei die Multifunktionsvorrichtung (135) ferner Folgendes aufweist:
eine zweite Schaltung zur Peer-to-Peer-Kommunikation, wobei die zweite Schaltung eine dritte Schaltung zur Kommunikation zwischen der Speichervorrichtung (120) und der rechnergestützten Speichereinheit (140) enthält; und
die Multifunktionsvorrichtung (135) ferner aufweist:
einen ersten Multiplexer/Demultiplexer (365), der so konfiguriert ist, dass er der rechnergestützte Speichereinheit (140) ermöglicht, mit dem Host-Prozessor (110) und der Speichervorrichtung (120) zu kommunizieren.

2. Multifunktionsvorrichtung (135) gemäß Anspruch 1, wobei die erste Schaltung einen zweiten Multiplexer/Demultiplexer (330) enthält, der so konfiguriert ist, dass er mindestens entweder die Speichervorrichtung (120) oder die rechnergestützte Speichereinheit (140) als Ziel für die Nachricht identifiziert, mindestens teilweise basierend auf den Daten in der Nachricht.

3. Multifunktionsvorrichtung (135) gemäß Anspruch 2, wobei die erste Schaltung ferner enthält:
eine erste Bridge (335), die mit dem zweiten Port (355) verbunden ist; und
eine zweite Bridge (340), die mit dem dritten Port (360) verbunden ist,
wobei der zweite Multiplexer/Demultiplexer (330) so konfiguriert ist, dass er die Nachricht mindestens teilweise basierend auf den Daten in der Nachricht entweder an die erste Bridge (335) oder an die zweite Bridge (340) weiterleitet.

4. Multifunktionsvorrichtung (135) gemäß einem der Ansprüche 1 bis 3, wobei:
der erste Port (310) einen Endpunkt enthält;
der zweite Port (355) einen ersten Root-Port enthält; und
der dritte Port (360) einen zweiten Root-Port enthält.

5. Multifunktionsvorrichtung (135) gemäß Anspruch 4, wobei:
der erste Root-Port so konfiguriert ist, dass er mindestens eine erste exponierte Funktion der Speichervorrichtung (120) identifiziert;
der zweite Root-Port so konfiguriert ist, dass er mindestens eine zweite exponierte Funktion der rechnergestützten Speichereinheit (140) identifiziert; und
der Endpunkt so konfiguriert ist, dass er mindestens die erste exponierte Funktion und die zweite exponierte Funktion freilegt,
wobei die erste exponierte Funktion mindestens eine Physikalische Funktion, PF, oder eine Virtuelle Funktion, VF, enthält und wobei die zweite exponierte Funktion mindestens eine PF oder eine VF enthält.

6. Multifunktionsvorrichtung (135) gemäß einem der Ansprüche 1 bis 5, wobei die zweite Schaltung einen Puffer zum Speichern von Daten enthält, die mit der rechnergestützten Speichereinheit (140) gemeinsam genutzt werden sollen.

7. Multifunktionsvorrichtung (135) gemäß einem der Ansprüche 1 bis 6, wobei die rechnergestützte Speichereinheit (140) eine Netzwerk-Schnittstellenkarte (NIC) enthält.

8. Multifunktionsvorrichtung (135) gemäß einem der Ansprüche 1 bis 7, wobei die Multifunktionsvorrichtung (135) so konfiguriert ist, dass sie unter Verwendung eines Protokolls mit mindestens einem von dem Host-Prozessor (110), der Speichervorrichtung (120) oder der rechnergestützten Speichereinheit (140) kommuniziert, wobei das Protokoll mindestens eine der folgenden Komponenten enthält: Peripheral Component Interconnect Express, PCIe, Ethernet, Remote Direct Memory Access, RDMA, Transmission Control Protocol/Internet Protocol, TCP/IP, InfiniBand, Serial Attached Small Computer System Interface, SCSI, SAS, Internet SCSI, iSCSI, oder Serial AT Attachment, SATA.

9. Verfahren, das folgendes aufweist:
Empfangen einer Anforderung an einem ersten Port (310) einer Multifunktionsvorrichtung (135) von einem Host-Prozessor (110);
Identifizieren einer ersten Vorrichtung von der Anforderung;
Identifizieren eines zweiten Ports (355) der Multifunktionsvorrichtung (135), der mit der ersten Vorrichtung verbunden ist; und
Senden der Anforderung an die erste Vorrichtung über den zweiten Port (355) der Multifunktionsvorrichtung (135),
wobei die Multifunktionsvorrichtung (135) einen dritten Port (360) enthält, der mit einer zweiten Vorrichtung verbunden ist,
die erste Vorrichtung aus einem Satz mit einer Speichervorrichtung (120) oder einer rechnergestützten Speichereinheit (140) genommen wird; und
die zweite Vorrichtung aus dem Satz mit der Speichervorrichtung (120) oder der rechnergestützten Speichereinheit (140) genommen wird,
wobei die Multifunktionsvorrichtung (135) aufweist:
eine erste Schaltung zum Weiterleiten der Anforderung von dem Host-Prozessor (110) an mindestens eine der Speichervorrichtung (120) oder der rechnergestützten Speichereinheit (140);
wobei die Multifunktionsvorrichtung (135) aufweist:
eine zweite Schaltung zur Peer-to-Peer-Kommunikation, wobei die zweite Schaltung eine dritte Schaltung zum Kommunizieren zwischen der Speichervorrichtung (120) und der rechnergestützten Speichereinheit (140) enthält; und
die Multifunktionsvorrichtung (135) aufweist:
einen ersten Multiplexer/Demultiplexer (365), der so konfiguriert ist, dass er der rechnergestützten Speichereinheit (140) ermöglicht, mit dem Host-Prozessor (110) und der Speichervorrichtung (120) zu kommunizieren.

10. Verfahren gemäß Anspruch 9, wobei:
Empfangen der Anforderung an dem ersten Port (310) der Multifunktionsvorrichtung (135) von dem Host-Prozessor (110) Empfangen der Anforderung an einem Endpunkt der Multifunktionsvorrichtung (135) von dem Host-Prozessor (110) enthält;
Senden der Anforderung an die erste Vorrichtung über den zweiten Port (355) der Multifunktionsvorrichtung (135) Senden der Anforderung an die erste Vorrichtung über einen Root-Port der Multifunktionsvorrichtung (135) enthält.

11. Verfahren gemäß Anspruch 10, wobei:
der dritte Port (360) einen zweiten Root-Port der Multifunktionsvorrichtung (135) enthält; und
das Verfahren ferner aufweist:
Identifizieren mindestens einer ersten exponierten Funktion der ersten Vorrichtung über den Root-Port;
Identifizieren mindestens einer zweiten exponierten Funktion der zweiten Vorrichtung über den zweiten Root-Port; und
Exponieren mindestens der ersten exponierten Funktion und der zweiten exponierten Funktion gegenüber dem Host-Prozessor (110) am Endpunkt der Multifunktionsvorrichtung (135),
wobei die erste exponierte Funktion mindestens eine Physikalische Funktion, PF, oder eine Virtuelle Funktion, VF, enthält und wobei die zweite exponierte Funktion mindestens eine PF oder eine VF enthält.

12. Verfahren gemäß einem der Ansprüche 9 bis 11, ferner aufweisend Bereitstellen von Daten von der zweiten Vorrichtung an die erste Vorrichtung.

## Revendications

1. Dispositif multifonction (135) comprenant:
un premier port (310) configuré pour communiquer avec un processeur hôte (110);
un deuxième port (355) configuré pour communiquer avec un dispositif de stockage (120);
un troisième port (360) configuré pour communiquer avec une unité de stockage informatisée (140);
un premier circuit configuré pour acheminer un message provenant du processeur hôte (110) vers le dispositif de stockage (120) ou/et l'unité de stockage informatisée (140);
le dispositif multifonction (135) comprenant de plus
un deuxième circuit pour une communication pair à pair, le deuxième circuit incluant un troisième circuit pour une communication entre le dispositif de stockage (120) et l'unité de stockage informatisée (140); et
le dispositif multifonction (135) comprenant de plus
un premier multiplexeur/démultiplexeur (365) configuré pour permettre à l'unité de stockage informatisée (140) de communiquer avec le processeur hôte (110) et le dispositif de stockage (120).

2. Dispositif multifonction (135) selon la revendication 1, dans lequel le premier circuit inclut un deuxième multiplexeur/démultiplexeur (330) configuré pour identifier le dispositif de stockage (120) ou/et l'unité de stockage informatisée (140) comme destination du message, sur la base, au moins en partie, d'une donnée contenue dans le message.

3. Dispositif multifonction (135) selon la revendication 2, dans lequel le premier circuit inclut de plus:
un premier pont (335) connecté au deuxième port (355); et
un deuxième pont (340) connecté au troisième port (360),
dans lequel le deuxième multiplexeur/démultiplexeur (330) est configuré pour acheminer le message vers le premier pont (335) ou/et le deuxième pont (340), sur la base, au moins en partie, de la donnée contenue dans le message.

4. Dispositif multifonction (135) selon une quelconque des revendications 1 à 3, dans lequel:
le premier port (310) inclut un point de terminaison;
le deuxième port (355) inclut un premier port racine; et
le troisième port (360) inclut un deuxième port racine.

5. Dispositif multifonction (135) selon la revendication 4, dans lequel:
le premier port racine est configuré pour identifier au moins une première fonction exposée du dispositif de stockage (120);
le deuxième port racine est configuré pour identifier au moins une deuxième fonction exposée de l'unité de stockage informatisée (140); et
le point de terminaison est configurée pour exposer au moins la première fonction exposée et la deuxième fonction exposée,
dans lequel la première fonction exposée inclut une fonction physique, PF, ou/et une fonction virtuelle, VF, et dans lequel la deuxième fonction exposée inclut une PF ou/et une VF.

6. Dispositif multifonction (135) selon une quelconque des revendications 1 à 5, dans lequel le deuxième circuit inclut un tampon pour stocker des données qui sont à partager avec l'unité de stockage informatisée (140).

7. Dispositif multifonction (135) selon une quelconque des revendications 1 à 6, dans lequel l'unité de stockage informatisée (140) inclut une carte d'interface réseau, NIC.

8. Dispositif multifonction (135) selon une quelconque des revendications 1 à 7, dans lequel le dispositif multifonction (135) est configuré pour communiquer avec le processeur hôte (110) et/ou le dispositif de stockage (120) et/ou l'unité de stockage informatisée (140) en utilisant un protocole, le protocole incluant au moins un des éléments suivants: Peripheral Component Interconnect Express, PCIe, Ethernet, Remote Direct Memory Access, RDMA, Transmission Control Protocol/Internet Protocol, TCP/IP, InfiniBand, Serial Attached Small Computer System Interface, SCSI, SAS, Internet SCSI, iSCSI, ou Serial AT Attachment, SATA.

9. Procédé comprenant:
une étape consistant à recevoir, par un premier port (310) d'un dispositif multifonction (135), une demande provenant d'un processeur hôte (110);
une étape consistant à identifier un premier dispositif à partir de la demande;
une étape consistant à identifier un deuxième port (355) du dispositif multifonction (135) connecté au premier dispositif; et
une étape consistant à transmettre la demande au premier dispositif via le deuxième port (355) du dispositif multifonction (135),
dans lequel le dispositif multifonction (135) inclut un troisième port (360) connecté à un deuxième dispositif,
le premier dispositif est tiré d'un ensemble incluant un dispositif de stockage (120) ou une unité de stockage informatisée (140); et
le deuxième dispositif est tiré de l'ensemble incluant le dispositif de stockage (120) ou l'unité de stockage informatisée (140),
dans lequel le dispositif multifonction (135) comprend:
un premier circuit pour acheminer la demande provenant du processeur hôte (110) vers le dispositif de stockage (120) ou/et l'unité de stockage informatisée (140);
le dispositif multifonction (135) comprenant
un deuxième circuit pour une communication pair à pair, le deuxième circuit incluant un troisième circuit pour une communication entre le dispositif de stockage (120) et l'unité de stockage informatisée (140); et
le dispositif multifonction (135) comprenant
un premier multiplexeur/démultiplexeur (365) configuré pour permettre à l'unité de stockage informatisée (140) de communiquer avec le processeur hôte (110) et le dispositif de stockage (120).

10. Procédé selon la revendication 9, dans lequel:
l'étape consistant à recevoir, par le premier port (310) du dispositif multifonction (135), la demande provenant du processeur hôte (110) inclut une étape consistant à recevoir, par un point de terminaison du dispositif multifonction (135), la demande provenant du processeur hôte (110);
l'étape consistant à transmettre la demande au premier dispositif via le deuxième port (355) du dispositif multifonctions (135) inclut une étape consistant à transmettre la demande au premier dispositif via un port racine du dispositif multifonctions (135).

11. Procédé selon la revendication 10, dans lequel:
le troisième port (360) inclut un deuxième port racine du dispositif multifonction (135); et
le procédé comprend de plus:
une étape consistant à identifier au moins une première fonction exposée du premier dispositif via le port racine;
une étape consistant à identifier au moins une deuxième fonction exposée du deuxième dispositif via le deuxième port racine; et
une étape consistant à exposer au moins la première fonction exposée et la deuxième fonction exposée au processeur hôte (110) au niveau du point de terminaison du dispositif multifonction (135),
dans lequel la première fonction exposée inclut une fonction physique (PF) ou/et une fonction virtuelle (VF), et dans lequel la deuxième fonction exposée inclut une PF ou/et une VF.

12. Procédé selon une quelconque des revendications 9 à 11, comprenant de plus une étape consistant à fournir une donnée provenant du deuxième dispositif au premier dispositif.
